# EUROPEAN PATENT APPLICATION

(11) **EP 2 899 214 A1**
(43) Date of publication of application: **29.07.2015**
(21) Application number: 14152670.7
(22) Date of filing: 27.01.2014
(51) Int. Cl.: C08B 1/00, C08B 15/06, C08B 31/00, C08B 37/00, C08F 290/10

(54) **Ethylenically unsaturated polysaccharides, method for their production and their use**

(71) Applicant: BASF SE, 67056 Ludwigshafen (DE)
(72) Inventor: Granström, Mari, 00120 Helsinki (FI); Zajaczkowski-Fischer, Marta, 67141 Neuhofen (DE); Kindler, Alois, 67269 Grünstadt (DE)
(74) Representative: Reitstötter Kinzebach

(57) **Abstract**

The present invention relates to a method for producing an ethylenically unsaturated polysaccharide, ethylenically unsaturated polysaccharides obtainable by said method, polymers comprising those unsaturated polysaccharides in polymerized form and the use thereof.

## Description

### FIELD OF THE INVENTION

The present invention relates to a method for producing an ethylenically unsaturated polysaccharide, ethylenically unsaturated polysaccharides obtainable by said method, polymers comprising those unsaturated polysaccharides in polymerized form and the use thereof.

Polyhydroxy-funtionalized polymers are used in many technical fields, e.g. cosmetic and pharmaceutical compositions or coatings for the textile, paper, printing and leather industry. In particular, polysaccharides play an important role in cosmetic formulations due to their unique application characteristics. Thus, polysaccharides can act as thickeners, suspending agents, hair conditioners, moisturizers, emulsifiers and emollients. In pharmaceutics, polysaccharides are employed e.g. in wound-healing agents. Nevertheless, in many cases the application properties of known polysaccharides still need improvement. For example, many natural and modified polysaccharides cannot be incorporated into liquid formulations with justifiable effort. There is also a demand to enhance the product performance of synthetic polymers by incorporation of polysaccharides into those polymers for the purpose of conferring the advantageous properties of the polysaccharides at least partly to those polymers. A prerequisite for this is that polysaccharide macromers can be provided which are copolymerizable with the typical monomers of customary polymers used in cosmetics, pharmaceutics etc.

WO 2004/099273 relates to water-soluble or water-dispersible polymers made from monoethylenically-unsaturated saccharide monomers, comprising a polymer of
(A) 5 to 100 wt.% of at least one ester, selected from the group of monoacrylate and monomethacrylate esters of saccharides and saccharide derivatives, wherein the monoester has a content of saccharides or saccharide derivatives multiply esterified with acrylic or methacrylic acid of ≤ 2.5 wt.% and
(B) 0 to 95 wt.% of at least one further monoethylenically-unsaturated monomer,
and which have a mean molecular mass Mw of 5,000 to 2,500,000.

US 2011/0175023 A1 describes a process for chlorinating polysaccharides which comprises
a1) dissolving a polysaccharide in a solvent system which comprises at least one ionic liquid, and
a2) reacting the polysaccharide with a chlorinating agent.

WO 2011/157777 relates to a water-soluble or water-dispersible copolymer containing units of
a) at least one ethylenically unsaturated monomer, comprising a saccharide side group and
b) at least one hydrophilic monomer that is different from (meth)acrylamide,
wherein the percentage by weight of the ethylenically unsaturated monomers, comprising a saccharide side group is 5 to 95 wt.%. The copolymers exhibit high affinity to inorganic surfaces or hydrophilic fibers such as cotton and are used in textile detergents as polymers that are able to dissolve dirt and/or prevent graying or minimize the risk of the microbial colonization of materials coated therewith.

It has now been found surprisingly that ethylenically unsaturated polysaccharides with advantageous properties can be obtained, if a chlorinated polysaccharide is subjected to a first functionalization with a difunctional compound that is suitable for replacing the chlorine atoms by spacer groups with a terminal OH groups and subjecting this intermediate to a second functionalization with a compound that bears a copolymerizable double bond and a glycidyl group capable of reacting with the terminal OH groups of the spacer groups of the intermediate. The advantageous properties of the ethylenically unsaturated polysaccharides are generally retained in the polymer products based thereupon. They have an overall good application profile for diverse areas of use, e.g. in personal care and pharmaceutical compositions, compositions used for industrial or institutional or hospital disinfection, compositions used for material protection, etc.

### SUMMARY OF THE INVENTION

According to a first aspect of the present invention, there is provided a method for producing an ethylenically unsaturated polysaccharide which comprises
a) providing a chlorinated polysaccharide, wherein at least a part or all of the hydroxyl groups have been replaced by chlorine atoms,
b) reacting the chlorinated polysaccharide with at least one compound of the formula (I)

   HX-A-OH (I)

   wherein
   X is O or NR^{a}, where R^{a} is hydrogen, alkyl, cycloalkyl or aryl,
   A is an unsubstituted or substituted C₁-C₂₀-alkylene which may be interrupted by one or more nonadjacent groups which are selected from -O- and -S-,
   to replace at least a part or all of the chlorine atoms by -X-A-OH groups,
c) reacting the reaction product of step b) with at least one compound of the formula (II) 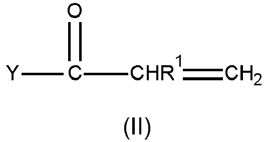 wherein
   - R¹: is hydrogen or C₁-C₄-alkyl, and
   - Y: is a group cable of reacting with active hydrogen atoms of the -X-A-OH groups.

A preferred embodiment is a method for producing an ethylenically unsaturated polysaccharide which comprises
a) providing a chlorinated polysaccharide, wherein at least a part or all of the hydroxyl groups have been replaced by chlorine atoms,
b) reacting the chlorinated polysaccharide with at least one compound of the formula (I)

   HX-A-OH (I)

   wherein
   - X: is O or NR^{a}, where R^{a} is hydrogen, alkyl, cycloalkyl or aryl,
   - A: is an unsubstituted or substituted C₁-C₂₀-alkylene which may be interrupted by one or more nonadjacent groups which are selected from -O- and -S-,
   to replace at least a part or all of the chlorine atoms by -X-A-OH groups,
c) reacting the reaction product of step b) with at least one compound of the formula (II.1) 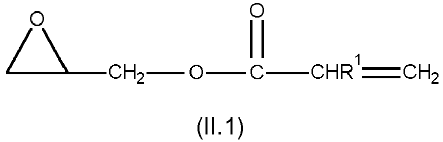 wherein
   - R¹: is hydrogen or C₁-C₄-alkyl,
   to replace at least a part or all of the -X-A-OH groups by groups of the formula (II.1a) 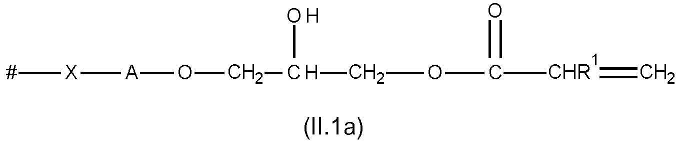 wherein
   - X: is O or NR^{a}, where R^{a} is hydrogen, alkyl, cycloalkyl or aryl,
   - A: is an unsubstituted or substituted C₁-C₂₀-alkylene which may be interrupted by one or more nonadjacent groups which are selected from -O- and -S-,
   - R¹: is hydrogen or C₁-C₄-alkyl, and
   - #: represents the bonding site to a carbon atom of the polysaccharide,
   with the proviso that if X is NH, at least a part or all of the -X-A-OH groups can also be replaced by groups of the formula (II.1b) 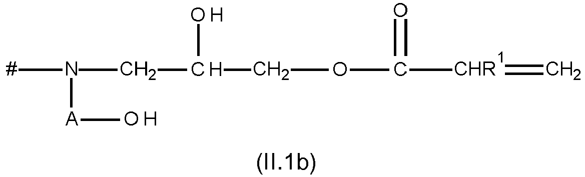 wherein X, A, R¹ and # have the afore-mentioned meaning.

A further object of the invention relates an ethylenically unsaturated polysaccharide, obtainable by the process described above and in the following.

A further object of the invention relates to an ethylenically unsaturated polysaccharide, comprising at least one group of the formula (II.1a) 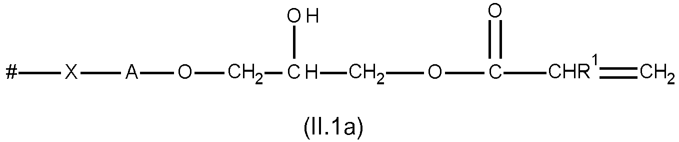 and/or comprising at least one group of the formula (II.b) 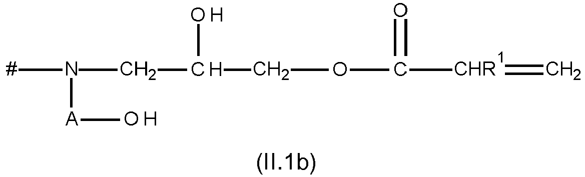 wherein
- X, A and R¹: are defined as above and in the following, and
- #: represents the bonding site to a carbon atom of the polysaccharide.

A further object of the present invention relates to a polymer comprising polymerized units of
α) at least one ethylenically unsaturated polysaccharide as defined above and in the following,
β) optionally at least one ethylenically unsaturated monomer different from component α).

A further object of the invention relates to a personal care composition, comprising
A) at least one polymer P), comprising polymerized units of
   α) at least one ethylenically unsaturated polysaccharide as defined above and in the following,
   β) optionally at least one ethylenically unsaturated monomer different from component α),
B) at least one cosmetically acceptable or pharmaceutically acceptable carrier.

A further object of the invention relates to a pharmaceutical composition, comprising
A) at least one polymer P), comprising polymerized units of
   α) at least one ethylenically unsaturated polysaccharide as defined above and in the following,
   β) optionally at least one ethylenically unsaturated monomer different from component α),
B) optionally at least one pharmaceutically acceptable active ingredient, and
C) at least one pharmaceutically acceptable excipient.

A further object of the invention relates to a microbiocidal composition, comprising
A) at least one polymer P), comprising polymerized units of
   α) at least one ethylenically unsaturated polysaccharide as defined above and in the following,
   β) optionally at least one ethylenically unsaturated monomer different from component α),
B) optionally at least one further microbiocidal compound different from the compounds of component (A),
C) optionally at least one polymer and/or at least one polymerizable compound, and
D) optionally at least one additive.

A further object of the invention relates to the use of a polymer P) as defined above and in the following in
- a personal care composition, or
- a composition used for industrial or institutional or hospital disinfection, or
- a material protection composition, or
- a pharmaceutical composition, or
- a microbiocidal polymer, or
- a microbiocidal coating composition.

A further object of the invention relates to the use of a polymer P) as defined above and in the following as auxiliary in pharmacy, preferably as or in (a) coating(s) for solid drug forms, as surface-active compound, as or in (an) adhesive(s) and as or in (a) coating(s) for the textile, paper, printing and leather industry.

### DETAILED DESCRIPTION OF THE INVENTION

The present invention has the following advantages:
- The intermediates obtained in step b) of the process according to the invention are characterized by a good solubility in water and is susceptible for a substitution with polymerizable groups.
- The ethylenically unsaturated polysaccharides are macromonomers (macromers) that can be copolymerized with a multitude of different monomers. Thus, it is possible to enhance the product performance of synthetic polymers by incorporation of polysaccharides into those polymers.
- The polymers P) on the basis of the ethylenically unsaturated polysaccharides exhibit high affinity to various surfaces, in particular inorganic surfaces, such as metals, e.g. stainless steel, glass, ceramic, mineral materials, and polymer materials and are suitable for modifying the surface properties of these materials.
- The polymers P) on the basis of the ethylenically unsaturated polysaccharides generally exhibit high electrolyte stability and high colloid stability in hot water.
- The polymers P) on the basis of the ethylenically unsaturated polysaccharides are suitable to minimize the risk of microbial colonization of materials coated therewith or materials comprising those polymers P) in incorporated form.

Within the context of the present invention, the expression active hydrogen atom denotes the hydrogen atoms of OH groups and of primary and secondary amino groups.

For the purposes of this invention, the prefix "(meth)acryl" denotes compounds which may be derived equally from acrylic acid and methacrylic acid.

Within the context of the present invention, the expression alkyl comprises straight-chain and branched alkyl groups. Suitable alkyl groups are, for example, straight-chain or branched C₁-C₃₀-alkyl groups, preferably C₁-C₂₀-alkyl groups, more preferably C₁-C₁₂-alkyl groups, in particular C₁-C₄-alkyl groups. These include methyl, ethyl, propyl, isopropyl, n-butyl, 2-butyl, sec-butyl, tert-butyl, n-pentyl, 1-methylbutyl, 2-methylbutyl, 3-methylbutyl, 1,2-dimethylpropyl, 1,1-dimethylpropyl, 2,2-dimethylpropyl, 1-ethylpropyl, n-hexyl, 1-methylpentyl, 2-methylpentyl, 3-methylpentyl, 4-methylpentyl, 1,2-dimethylbutyl, 1,3-dimethylbutyl, 2,3-dimethylbutyl, 1,1-dimethylbutyl, 2,2-dimethylbutyl, 3,3-dimethylbutyl, 1,1,2-trimethylpropyl, 1,2,2-trimethylpropyl, 1-ethylbutyl, 2-ethylbutyl, 1-ethyl-2-methylpropyl, n-heptyl, 2-heptyl, 3-heptyl, 2-ethylpentyl, 1-propylbutyl, n-octyl, n-nonyl, n-decyl, n-undecyl, n-dodecyl, n-tridecyl, n-tetradecyl, n-pentadecyl, n-hexadecyl, n-heptadecyl, n-octadecyl, n-nonadecyl, arachinyl, behenyl, lignocerinyl, melissinyl, etc.

Cycloalkyl is preferably C₅-C₈-cycloalkyl, such as cyclopentyl, cyclohexyl, cycloheptyl or cyclooctyl.

Aryl comprises unsubstituted and substituted aryl groups and is preferably phenyl, tolyl, xylyl, mesityl, naphthyl, fluorenyl, anthracenyl, phenanthrenyl, naphthacenyl, more preferred phenyl, tolyl, xylyl or mesityl. In particular, aryl is phenyl.

The term C₁-C₂₀-alkylene (or alkanediyl) as used herein in each case denotes an alkyl radical having 1 to 20 carbon atoms as defined above, wherein one hydrogen atom at any position of the alkyl radical is replaced by one further binding site, thus forming a bivalent radical. Accordingly, C₁-C₂₀-alkylene is a divalent branched or unbranched saturated aliphatic chain having 1 to 20 carbon atoms, for example -CH₂-, -CH₂CH₂-, -CH(CH₃)-, -CH₂CH₂CH₂-, -CH(CH₃)CH₂-, -CH₂CH₂CH₂CH₂-, -CH₂CH(CH₃)CH₂-, -CH(CH₃)CH(CH₃)-, -CH₂CH₂CH₂CH₂CH₂-, -CH₂(CH₂)₂CH(CH₃)-, -CH₂C(CH₃)₂CH₂-, and the like. The term "each alkylene may be interrupted by one or more nonadjacent groups selected from -O- and -S-" denotes an alkylene chain having usually 1 to 20 carbon atoms as defined above where at least one internal methylene group of the alkylene chain is replaced by O- or -S-. The alkylene moiety may comprise, e.g. 1, 2, 3, 4, 5, or more than 5 identical or different groups selected from O and S. If a plurality of those interrupting heteroatoms selected from O or S occurs in alkylene, those heteroatoms are usually identical.

### Step a)

Preferably, providing the chlorinated polysaccharide in step a) comprises
a1) dissolving a polysaccharide in a solvent system which comprises at least one ionic liquid, and
a2) reacting the polysaccharide with a chlorinating agent.

A preferred method for chlorinating polysaccharides is described in US 2011/0175023 A1. The teaching of this document is incorporated herein by reference.

In the context of the present invention, the expression "polysaccharide" also comprises carbohydrates which have a low number, e.g. two to ten monosaccharide units and are denoted elsewhere as "oligosaccharides".

Preferably, the polysaccharide employed in step a1) is selected from cellulose, hemicellulose, starch, glycogen, dextran, tunicin, inulin, chitin, alginic acid, chemically modified cellulose, etc. More preferably, the polysaccharide employed in step a1) is selected from cellulose, hemicellulose and chemically modified cellulose.

Glycogen is a multibranched polysaccharide that has a similar structure to amylopectin but is usually more extensively branched and compact than starch. Dextran is a complex, branched polysaccharide made of glucose molecules composed of chains of varying lengths. The straight chain of dextran consists of α-1,6 glycosidic linkages between the glucose units, whereas the branches begin from α-1,3 linkages. Tunicin is also a polysaccharide made of glucose units and is present in the mantle (or tunic) of the tunicates, a marine organism. Inulins are polymers composed mainly of fructose units and typically have a terminal glucose unit. The fructose units in inulins are joined by a β-2,1 glycosidic bond. Further examples of suitable polysaccharides are the polycondensates of D-fructose, e.g. inulin.

A natural derivative of glucose is chitin, a long-chain polymer of N-acetylglucosamine. The polysaccharides, in particular cellulose, may also be chemically modified, for example by etherification or esterification of at least a part of the of hydroxyl groups.

A special type hemicellulose is xyloglucan that occurs e.g. in the primary cell wall of all vascular plants. Xyloglucan has a backbone of β-1,4-linked glucose residues, most of which substituted with 1-6 linked xylose sidechains.

Preferably, the polysaccharide employed in step a1) comprises -CH₂OH groups. In polysaccharides with -CH₂OH groups (hydroxyl methylene groups) usually the chlorination of the hydroxyl groups of the -CH₂OH groups is preferred over the chlorination of the hydroxyl groups directly bound the ring carbon atoms of the polysaccharide.

Preferably, the polysaccharide employed in step a1) is selected from cellulose, hemicellulose and chemically modified cellulose. In a more preferred embodiment of the invention cellulose is used as polysaccharide. Most preferably, the cellulose used is unmodified.

Preferably, the polysaccharides used for the process of the invention have a degree of polymerization (DP) of at least 10, more preferably of at least 50, in particular of at least 150, especially of at least 300. The maximum DP of the polysaccharides preferably does not exceed 2500, more preferably does not exceed 2000, in particular does not exceed 1800. The maximum DP of the polysaccharides, for example, does not exceed 1500, more preferably does not exceed 1000 or does not exceed 800.

Preferably, in the process of the invention a cellulose is employed that has a DP of at least 10, more preferably of at least 50, in particular of at least 150, especially of at least 300 least 50. The DP of the cellulose preferably does not exceed 2500, more preferably does not exceed 2000, in particular does not exceed 1800. The maximum DP of the cellulose, for example, does not exceed 1500, more preferably does not exceed 1000 or does not exceed 800.

The degree of polymerization (DP) is the number of repeat units in an average polymer chain. DP can be calculated as follows: DP = total Mw of the polymer/Mw of the repeating unit. The molecular weight is the weight average molecular weight. The DP can be measured e.g. by Gel Permeation Chromatography (GPC) or Size Exclusion Chromatography (SEC) A further well known method that is used as a standard for DP measurement in the pulp industry is the Cuprene method. According to this method a polysaccharide sample is dissolved in cupriethylenediamine hydroxide and the intrinsic viscosity of this solution is measured that allows the determination of the degree of polymerization.

The solvent system employed in step a1) may consist of one solvent or a mixture of solvents. The solvent system may consist of only one ionic liquid or a mixture of at least two different ionic liquids or a mixture of at least one ionic liquids and at least one other organic, non-ionic solvent.

Suitable organic solvents are non-ionic, polar solvents which can be mixed homogeneously with ionic liquids and do not lead to precipitation of the polysaccharide. Preferred organic solvents are ethers or ketons, for example dioxane, dimethyl sulfoxide, dimethylformamide, dimethylacetamide or sulfolane. Preferred is dioxane.

The content of ionic liquids in the solvent system employed in step a1) is preferably at least 20% by weight, more preferably at least 50% by weight and most preferably at least 80% or 90% by weight.

In one preferred embodiment of the invention, the solvent system is a mixture, comprising one or more ionic liquids and at least one non ionic solvent, in particular dioxane. In such mixture the content of ionic liquids is preferably from 20 to 90% by weight, the remainder being at least one organic non-ionic solvent.

The solvent system preferably contains no water or has only a low content of water of below 5% by weight, based on the total weight of the solvent system. In particular the content of water is below 2% by weight.

The term ionic liquid refers to salts (compounds composed of cations and anions) which at atmospheric pressure (1 bar) have a melting point of less than 200°C, preferably less than 150°C, particularly preferably less than 100°C and very particularly preferably less than 80°C.

Suitable ionic liquids that can be employed in step a) of the process of the invention are described in US 2011/0175023 A1, paragraphs [0028 - 0061]. This teaching is incorporated herein by reference.

Preferred cations are unsubstituted or substituted imidazolium ions. Particularly suitable imidazolium ions are 1-methylimidazolium, 1-ethylimidazolium, 1-(1-propyl)imidazolium, 1-(1-allyl)imidazolium, 1-(1-butyl)imidazolium, 1-(1-octyl)-imidazolium, 1-(1-dodecyl)imidazolium, 1-(1-tetradecyl)imidazolium, 1-(1-hexadecyl)-imidazolium, 1,3-dimethylimidazolium, 1,3-diethylimidazolium, 1-ethyl-3-methyl-imidazolium, 1-(1-butyl)-3-methylimidazolium, 1-(1-butyl)-3-ethylimidazolium, 1-1-hexyl)-3-methylimidazolium, 1-(1-hexyl)-3-ethylimidazolium, 1-(1-hexyl)-3-butyl-imidazolium, 1-(1-octyl)-3-methylimidazolium, 1-(1-octyl)-3-ethylimidazolium, 1-(1-octyl)-3-butylimidazolium, 1-(1-dodecyl)-3-methylimidazolium, 1-(1-dodecyl)-3-ethyl-imidazolium, 1-(1-dodecyl)-3-butylimidazolium, 1-(1-dodecyl)-3-octylimidazolium, 1-(1-tetradecyl)-3-methylimidazolium, 1-(1-tetradecyl)-3-ethylimidazolium, 1-(1-tetradecyl)-3-butylimidazolium, 1-(1-tetradecyl)-3-octylimidazolium, 1-(1-hexadecyl)-3-methyl-imidazolium, 1-(1-hexadecyl)-3-ethylimidazolium, 1-(1-hexadecyl)-3-butylimidazolium, 1-(1-hexadecyl)-3-octylimidazolium, 1,2-dimethylimidazolium, 1,2,3-trimethyl-imidazolium, 1-ethyl-2,3-dimethylimidazolium, 1-(1-butyl)-2,3-dimethylimidazolium, 1-(1-hexyl)-2,3-dimethylimidazolium, 1-(1-octyl)-2,3-dimethylimidazolium, 1,4-dimethyl-imidazolium, 1,3,4-trimethylimidazolium, 1,4-dimethyl-3-ethylimidazolium, 3-methyl-imidazolium, 3-ethylimidazolium, 3-n-propylimidazolium, 3-n-butylimidazolium, 1,4-dimethyl-3-octylimidazolium, 1,4,5-trimethylimidazolium, 1,3,4,5-tetramethyl-imidazolium, 1,4,5-trimethyl-3-ethyhimidazolium, 1,4,5-trimethyl-3-butylimidazolium, 1,4,5-trimethyl-3-octylimidazolium, 1-prop-1-en-3-yl-3-methylimidazolium and 1-prop-1-en-3-yl-3-butylimidazolium. Especially suitable imidazolium ions (IVe) are 1,3-diethyl-imidazolium, 1-ethyl-3-methylimidazolium, 1-(n-butyl)-3-methylimidazolium.

Preferred cations are, in addition, pyridinium ions. These are selected, in particular, from pyridinium, 2-methylpyridinium, 2-ethylpyridinium, 5-ethyl-2-methylpyridinium and 2-methyl-3-ethylpyridinium and also 1-methylpyridinium, 1-ethylpyridinium, 1-(1-butyl)-pyridinium, 1-(1-hexyl)pyridinium, 1-(1-octyl)pyridinium, 1-(1-hexyl)pyridinium, 1-(1-octyl)pyridinium, 1-(1-dodecyl)pyridinium, 1-(1-tetradecyl)pyridinium, 1-(1-hexadecyl)-pyridinium, 1,2-dimethylpyridinium, 1-ethyl-2-methylpyridinium, 1-(1-butyl)-2-methyl-pyridinium, 1-(1-hexyl)-2-methylpyridinium, 1-(1-octyl)-2-methylpyridinium, 1-(1-dodecyl)-2-methylpyridinium, 1-(1-tetradecyl)-2-methylpyridinium, 1-(1-hexadecyl)-2-methylpyridinium, 1-methyl-2-ethylpyridinium, 1,2-diethylpyridinium, 1-(1-butyl)-2-ethyl-pyridinium, 1-(1-hexyl)-2-ethylpyridinium, 1-(1-octyl)-2-ethylpyridinium, 1-(1-dodecyl)-2-ethylpyridinium, 9-(1-tetradecyl)-2-ethylpyridinium, 1-(1-hexadecyl)-2-ethylpyridinium, 1,2-dimethyl-5-ethylpyridinium, 1,5-diethyl-2-methylpyridinium, 1-(1-butyl)-2-methyl-3-ethylpyridinium, 1-(1-hexyl)-2-methyl-3-ethylpyridinium and 1-(1-octyl)-2-methyl-3-ethylpyridinium, 1-(1-dodecyl)-2-methyl-3-ethylpyridinium, 1-(1-tetradecyl)-2-methyl-3-ethylpyridinium and 1-(1-hexadecyl)-2-methyl-3-ethylpyridinium.

Preferred cations are, in addition, unsubstituted or substituted pyrazolium ions. Particularly preferred pyrazolium ions are pyrazolium and 1,4-dimethylpyrazolium.

Preferred anions are chloride, bromide, hydrogensulfate, tetrachloroaluminate, thiocyanate, dicyanamide, methylsulfate, ethylsulfate, methanesulfonate, formate, acetate, dimethylphosphate, diethylphosphate, p-toluenesulfonate, tetrafluoroborate and hexafluorophosphate and methylmethylphosphonate (methylester of methylphosphonate).

Particularly preferred ionic liquids consist exclusively of an organic cation together with one of the anions mentioned. Most preferred are imidazolium salts with an imidazolium cation according to formula I and one of the above anions, specifically one of the particularly preferred anions, specifically acetate, chloride, dimethylphosphate or diethylphosphate or methylmethylphosphonate. Most preferred is acetate or chloride.

Suitable ionic liquids for use in the method according to the invention are commercially available, e.g. under the brand name Basionic® from BASF SE.

Advantageous compounds for use in the method according to the invention are, e.g.: 1-ethyl-3-methylimidazolium chloride (EMIM Cl, Basionic ST 80), 1-ethyl-3-methylimidazolium methanesulfonate (EMIM CH3SO3, Basionic ST 35), 1-butyl-3-methylimidazolium chloride (BMIM Cl, Basionic ST 70), 1-butyl-3-methylimidazolium methanesulfonate (BMIM CH3SO3, Basionic ST 78), methylimidazolium chloride (HMIM Cl, Basionic AC 75), methylimidazolium hydrogensulfate (HMIM HSO4 Basionic AC 39), 1-ethyl-3-methylimidazolium hydrogensulfate (EMIM HSO4 Basionic AC 25), 1-butyl-3-methylimidazolium hydrogensulfate (BMIM HSO4 Basionic AC 28), 1-ethyl-3-methylimidazolium acetate (EMIM Acetate, Basionic BC 01), 1-butyl-3-methylimidazolium acetate (BMIM Acetate, Basionic BC 02).

Particular preference is given to 1-butyl-3-methyhimidazolium chloride, 1-ethyl-3-methylimidazolium chloride, 1-ethyl-3-methylimidazolium acetate, 1 butyl-3-methylimidazolium acetate and mixtures thereof.

In step a1) of the process of the invention, a solution of the polysaccharide, preferably cellulose, in the solvent system is prepared. The concentration of the polysaccharide is usually in the range from 0.1 to 50% by weight, based on the total weight of the solution, preferably from 0.2 to 40% by weight, particularly preferably from 0.3 to 30% by weight and very particularly preferably from 0.5 to 20% by weight.

This dissolution procedure can be carried out by known methods at room temperature or with heating, but above the melting point or softening temperature of the ionic liquid. If a solvent system, comprising ionic liquids and non-ionic solvents is used, the polysaccharide may be dissolved in the ionic liquid first and the non-ionic solvent be added thereafter.

In step a2) of the process of the invention, the polysaccharides, preferably cellulose, is reacted with a chlorinating agent. The chlorinating agent may, for example, be added as such or in form of a solution in an appropriate solvent to the solution obtained after step a1).

Usual chlorinating agents may be used, for example thionyl chloride, methanesulfonyl chloride, chlorodimethyliminium chloride, phosphoryl chloride or para-toluenesulfonic chloride. A preferred chlorinating agent is thionyl chloride.

The chlorinating agent should be added at least in amounts to achieve the desired degree of substitution. The degree of substitution (DS) of polysaccharides is the average number of hydroxyl groups per six-ring unit of the polysaccharides substituted by a chloride. The degree of substitution (DS) of chlorinated cellulose is defined as the average number of substituted hydroxyl groups per anhydroglucose unit (AGU). The DS can be determined from the chlorine content detected in elemental analysis.

The chlorinated polysaccharide provided in step a) of the process of the invention preferably has a degree of substitution (DS) of at least 0.5, in particular of at least 1. Preferably, in the process of the invention a chlorinated polysaccharide obtained by the process of the afore-mentioned steps a1) and a2) is employed, having a degree of substitution (DS) of at least 0.5, in particular of at least 1.

Preferably, the chlorinated polysaccharide, provided in step a) comprises -CH₂-Cl groups. In particular, a chlorinated cellulose is provided in step a). The theoretical maximum of the DS in chlorinated cellulose is 3.0 (3 hydroxyl groups in the AGU). The first hydroxyl group in cellulose to be substituted by a chlorine atom will usually be the hydroxyl of the hydroxyl-methylene-group.

A preferred DS of the chlorinated cellulose provided in step a) is 0.5 to 3, more preferred is a DS of 0.8 to 3. Suitable chlorinated cellulose provided in step a) may have, for example, a DS of 0.5 to 1.5 or from 0.8 to 1.5. According to the afore-mentioned process a DS of the chlorinated cellulose of at least 1.0 can be easily achieved.

The chlorinating agent may be added in excess which means that more chlorinating agent may be added than required for the maximum DS. Non-reacted chlorinating agents may be removed by usual means, thionyl chloride may, for example, be removed by evaporation. The chlorinating agent, in particular thionyl chloride, does not only effect the substitution of the hydroxyl group by a chlorine atom, but leads also to a degradation of the polysaccharides, in particular cellulose. Hence the chlorinated polysaccharides, for example chlorinated cellulose, preferably have a degree of polymerization (DP) which is lower less than the DP of the non-chlorinated polysaccharides. In particular, the DP of the chlorinated polysaccharide provided in step a) of the process of the invention may be less than 90%, preferably less than 80%, more preferably less than 50% and most preferably less than 20% or even less than 10% of the DP of the non chlorinated starting material.

Preferably, in step a) a chlorinated polysaccharide with a DP of less than 100, more preferably with a DP of 5 to 100, especially of 20 to 60, more especially of 30 to 50 is provided. In a special embodiment, in step a) a chlorinated polysaccharide with a DP of 10 to 20 is provided.

Preferably, in step a) a chlorinated cellulose with a DP of less than 100, more preferably with a DP of 5 to 100, especially of 20 to 60, more especially of 30 to 50 is provided. In a special embodiment, in step a) a chlorinated cellulose with a DP of 10 to 20 is provided.

In a preferred embodiment of the process of the invention, in step a) a chlorinated cellulose is provided that has a DS of 0.5 to 3, specifically of 0.5 to 1.5 and a DP of 10 to 100, specifically of 10 to 50. Most preferred is chlorinated cellulose with a DS of 0.5 to 1.5 and a DP of 5 to 100 or chlorinated cellulose of a DS of 0.8 to 1.5 and a DP of 10 to 50.

Preferably, in the chlorinated cellulose provided in step a) a high amount of the hydroxyl groups in the 6-position have been replaced by chlorine atoms. Especially, up to 99.9%, more especially, up to 100% of the hydroxyl groups in the 6-position have been replaced by chlorine atoms. In a preferred embodiment of the process of the invention, in step a) a chlorinated cellulose is provided, wherein 60 to 100%, preferably 80 to 100%, in particular 90 to 99.9% of the hydroxyl groups in the 6-position have been replaced by chlorine atoms.

In a preferred embodiment of the process of the invention, in step a) a chlorinated cellulose is provided, wherein 0 to 20%, more preferably 0.1 to 10% of the hydroxyl groups directly bound to the ring carbon atoms have been replaced by chlorine atoms.

During the chlorinating reaction the reaction mixture is preferably kept at an elevated temperature; the temperature may be for example from 30 to 150°C, more preferably from 80 to 130°C. Preferably, the reaction in step a2) is performed at ambient pressure (1 bar). In general, the reaction in step a2) is carried out in air. However, it is also possible to carry it out under inert gas, i.e., for example, under N₂, a noble gas or a mixture thereof. Temperature and reaction time may be selected to achieve the desired degree of DS and DP. For the degradation no further additives like acids or nucleophiles (see WO 2007/101811, degradation by the use of acids or WO 2007/101813, degradation by nucleophiles) are required. Also the use of a base is not required. In a preferred embodiment, the chlorination in step a2) is performed in absence of an additional base.

The reaction product obtained in step a2) comprises the solvent system on the basis of at least one ionic liquid and the chlorinated polysaccharides. The chlorinated polysaccharides may be isolated, if desired, by usual means. The chlorinated polysaccharides may for example be obtained from the reaction product by adding a coagulating solvent (non-solvent for chlorinated polysaccharides) or other coagulating agent, in particular a base or basic salt, for example ammonia or a solution, comprising NH₄OH and separating the coagulated chlorinated polysaccharides from the solvent system. Depending on the way of mixing coagulating solvent and reaction mixture, different chlorinated species can be obtained. For example, predominantly mono-chlorinated species are obtained by pouring the coagulation solvent into the reaction mixture. On the other hand, predominantly di-chlorinated species are obtained by pouring the reaction mixture into the coagulation solvent.

### Step b)

In step b), the chlorinated polysaccharide is reacted with at least one compound of the formula (I)

HX-A-OH (I)

wherein
- X: is O or NR^{a}, where R^{a} is hydrogen, alkyl, cycloalkyl or aryl,
- A: is unsubstituted or substituted C₁-C₂₀-alkylene which may be interrupted by one or more nonadjacent groups which are selected from -O- and -S-,
to replace at least a part or all of the chlorine atoms by -X-A-OH groups.

Preferably, in the compounds of the formula (I), X is O or NR^{a}, where R^{a} is hydrogen or C₁-C₄-alkyl.

Preferably, in the compounds of the formula (I), A is an unsubstituted C₁-C-₁₀-alkylene which may be interrupted by one or more nonadjacent -O- groups.

Preferably, in the compounds of the formula (I), A is selected from -CH₂-, -CH₂CH₂-, -CH(CH₃)-, -CH₂CH₂CH₂-, -CH(CH₃)CH₂-, -CH₂CH₂CH₂CH₂-, -CH₂CH(CH₃)CH₂-, -CH(CH₃)CH(CH₃)-, -CH₂CH₂CH₂CH₂CH₂-, -CH₂(CH₂)₂CH(CH₃)-, -CH₂C(CH₃)₂CH₂-, -CH₂CH₂-O-CH₂CH₂-, -CH₂CH₂-O-CH₂CH₂-O-CH₂CH₂-, -CH₂CH₂-O-CH₂CH₂-O-CH₂CH₂-O-CH₂CH₂-, -CH₂CH₂-O-CH₂CH₂-O-CH₂CH₂-O-CH₂CH₂--O-CH₂CH₂-.

Preferably, the compounds (I) are selected from diols, amino alcohols and mixtures thereof.

In a preferred embodiment, the compounds (I) are selected from diols having 2 to 20 carbon atoms, preferably 2 to 12 carbon atoms, such as 1,2-ethanediol (ethylene glycol), 1,3-propanediol, 1,4-butanediol, 1,6-hexanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 2-methyl-1,3-propanediol, 2,2-dimethyl-1,3-propanediol, diethylene glycol, triethylene glycol, tetraethylene glycol, pentaethylene glycol, hexaethylene glycol, neopentyl glycol, cyclohexanedimethylol and mixtures thereof. Particular preference is given to 1,2-ethanediol.

In a preferred embodiment, the compounds (I) are selected from amino alcohols having 2 to 20 carbon atoms, preferably 2 to 12 carbon atoms, such as 2-aminoethanol, 2-(N-methylamino)ethanol, 3-aminopropanol, 4-aminobutanol, 1-ethylaminobutan-2-ol, 2-amino-2-methyl-1-propanol, 4-methyl-4-aminopentan-2-ol, N-methyldiethanolamine, etc. Particular preference is given to 2-aminoethanol.

Preferably, in step b) the compound of the formula (I) is used in an at least 3-fold molar excess, preferably in an at least 6-fold molar excess, more preferably in an at least 10-fold molar excess over the chlorinated polysaccharide.

In a first variant, the reaction in step b) is performed in the essential absence of extraneous solvent. The term "extraneous" denotes an additional (non-intrinsic) solvent, i.e. a component that is not a reactant or a reaction product. In the essential absence means that the amount of extraneous solvent used in step b) is less than 5% by weight, preferably less than 1 % by weight, based on the total weight of the reaction mixture.

In a second preferred embodiment, the reaction in step b) is performed in the presence of a polar solvent. Suitable polar aprotic solvents are selected from alcohols, such as methanol, ethanol, propanol, ketones, such as aceton and methylethylketon, ethers, such as tetrahydrofuran, diethylether, methyl-tert-butylether, esters, such as ethyl acetate, acetonitrile, ethylencarbonate, formamide, dimethylformamide (DMF), dimethylacetamide, dimethylsulfoxid (DMSO) and mixtures thereof. A preferred solvent for the reaction in step b) is ethanol.

The reaction in step b) is preferably performed in the presence of a base. Suitable bases are, for example, alkali metal hydroxides, e.g. NaOH and KOH; alkali metal alkoxides, e.g. sodium methoxide, potassium methoxide, sodium tert-butoxide, potassium tert-butoxide, sodium tert-pentoxide and potassium tert-pentoxide; alkali metal hydrides, e.g. sodium hydride and potassium hydride; alkali metal carbonates, e.g. sodium carbonate and potassium carbonate, amines, e.g. triethylamine, diisopropylethylamine etc.

In case of compound (I) being an aminoalcohol, the aminoalcohol itself can act as base, if added in excess.

Preferably, the base is employed in at least stoichiometric amount with regard to the molar amount of the chlorine atoms of the chlorinated polysaccharide.

Preferably, in step b) the molar ratio of base to chlorine atoms of the chlorinated polysaccharide is in a range of from 1:1 to 10:1, more preferably in a range of from 1:1 to 2:1.

In a special embodiment, the reaction in step b) comprises a step-wise reaction of the chlorinated polysaccharide with at least two different compounds of the formula (I). In this embodiment, each step is performed in the presence of a substoichiometric amount of the base.

Preferably, the reaction product of step b) is isolated from the reaction discharge by precipitation.

The precipitation can comprise at least one of the following measures:
- reducing the temperature of the reaction discharge,
- removing a part of the volatile components of the reaction discharge,
- adding an anti-solvent to the reaction discharge.

The reduction of the temperature of the reaction discharge can be effected by known cooling methods.

Removing a part of the volatile components of the reaction discharge can be effected e.g. by know distillation methods.

In a preferred embodiment, the isolation of the reaction product of step b) comprises a precipitation with an anti-solvent (a solvent in which the product is insoluble). Suitable anti-solvents are preferably selected from among linear C₁-C₄-alkanols, acetone and mixtures thereof. The anti-solvent is particularly preferably selected from among methanol, ethanol, acetone and mixtures thereof.

The precipitated reaction product of step b) can be subjected to washing with a liquid washing medium after it has been separated off. Suitable washing media are those in which the reaction product of step b) does not dissolve or dissolves only in small amounts. Preferred washing media are the above-described anti-solvents used for the precipitation. A particularly preferred washing medium is ethanol or acetone.

Preferably, the reaction product obtained in step b) is essentially free of chlorine atoms. Essentially free of chlorine means that the amount of chlorine atoms in the reaction product of step b) is less than 2% Cl as determined by elemental analysis.

### Step c)

Suitable compounds of the formula (II) are compounds, wherein the group Y is a group cable of a condensation or addition reaction with the alcoholic hydroxyl groups or, if present, secondary amino groups of the -X-A-OH groups bound to the polysaccharide product obtained in step b).

The compound of the formula (II) is preferably selected from acrylic acid, methacrylic acid, esters of acrylic acid, esters of methacrylic acid, anhydrides of acrylic acid, anhydrides of methacrylic acid, acrylic acid chloride, methacrylic acid chloride, acrylic acid bromide, methacrylic acid bromide, glycidylacrylate and glycidylmethacrylate.

In particular, the compound of the formula (II) used in step c) is selected from glycidylacrylate and glycidylmethacrylate. This leads to the formation ethylenically unsaturated polysaccharides with especially advantageous properties. Ethylenically unsaturated polysaccharides derived from glycidyl(meth)acrylate can be copolymerized with a multitude of different monomers. The polymers P) on the basis of the ethylenically unsaturated polysaccharides derived from glycidyl(meth)acrylate exhibit a high affinity to various surfaces, a high electrolyte stability and/or a high colloid stability in hot water. They are generally suitable to minimize the risk of microbial colonization.

In a first embodiment, the reaction of the product of step b) with at least one compound of the formula (II) is an esterification or amidation reaction. According to this embodiment, preferably (meth)acrylic acid or a derivative thereof is employed. Suitable derivatives are the afore-mentioned ester, anhydrides or halogenides. The reaction can be performed in the presence of a conventional esterification catalyst or amidation catalyst. Preferably, the reaction temperature is in a range of from 20 to 220°C, more preferably 50 to 150°C. The reaction can be performed in the presence of a conventional polymerization inhibitor. If (meth)acrylic acid is employed, the reaction is preferably performed in the presence of a water-entraining agent and/or to remove at least a part of the water formed in the reaction by distillation.

In a second preferred embodiment, the reaction of the product of step b) is reacted with glycidyl(meth)acrylate in a ring opening addition reaction.

Preferably, in step c) the compound of the formula (II) is used in an amount of from 1 to 100 mol%, more preferably in an amount of from 5 to 50 mol%, in particular in an amount of from 10 to 20 mol%, based on the molar amount of the repeat units (anhydroglucase units) of the polysaccharide reaction product of step b) employed in step c).

Preferably, the reaction in step c) is performed in the presence of a solvent. Preferred solvents are polar aprotic solvent. Suitable polar aprotic solvents for the reaction in step c) are selected from ketones ethers, esters, nitriles, alkylene carbonates, amides and sulfoxides. Preferably, the polar aprotic solvent I s selected from aceton, methylethylketon, tetrahydrofuran, diethylether, methyl-tert-butylether, ethyl acetate, acetonitrile, ethylencarbonate, formamide, dimethylformamide (DMF), dimethylacetamide, dimethylsulfoxid (DMSO) and mixtures thereof. A preferred solvent for the reaction in step b) is dimethylsulfoxide.

The reaction in step c) is preferably performed in the presence of a base. Suitable bases are those mentioned for the reaction in step b). Preferably, the base is selected from NaOH, KOH, sodium methoxide, potassium methoxide, sodium tert-butoxide, potassium tert-butoxide, sodium tert-pentoxide and potassium tert-pentoxide, sodium hydride, potassium hydride, sodium carbonate and potassium carbonate.

Preferably, in step c) the base is used in an amount of from 0,01 to 50 mol%, more preferably in an amount of from 0.1 to 10 mol%, in particular in an amount of from 0.5 to 5 mol%, based on the amount of the polysaccharide reaction product of step b) employed in step c).

Preferably, the reaction product of step c) is isolated from the reaction discharge by precipitation.

The precipitation can comprise at least one of the following measures:
- reducing the temperature of the reaction discharge,
- removing a part of the volatile components of the reaction discharge,
- adding an anti-solvent to the reaction discharge.

The reduction of the temperature of the reaction discharge can be effected by known cooling methods.

Removing a part of the volatile components of the reaction discharge can be effected e.g. by know distillation methods.

In a preferred embodiment, the isolation of the reaction product of step c) comprises a precipitation with an anti-solvent (a solvent in which the product is insoluble). Suitable anti-solvents are those mentioned in reaction step b). Preferably, the anti-solvent is selected from among linear C₁-C₄-alkanols, acetone and mixtures thereof. The anti-solvent is particularly preferably selected from among methanol, ethanol, acetone and mixtures thereof.

The precipitated reaction product of step c) can be subjected to washing with a liquid washing medium after it has been separated off. Suitable washing media are those in which the reaction product of step c) does not dissolve or dissolves only in small amounts. Preferred washing media are the above-described anti-solvents used for the precipitation. A particularly preferred washing medium is methanol or acetone.

A further object of the invention is an ethylenically unsaturated polysaccharide, obtainable by the afore-mentioned process.

A further object of the invention is an ethylenically unsaturated polysaccharide, comprising at least one group of the formula (II.a) 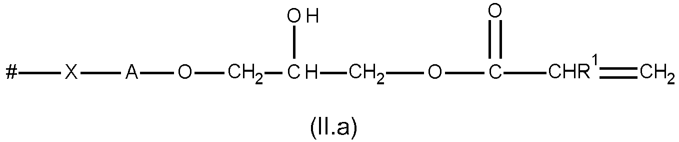 and/or comprising at least one group of the formula (II.b) 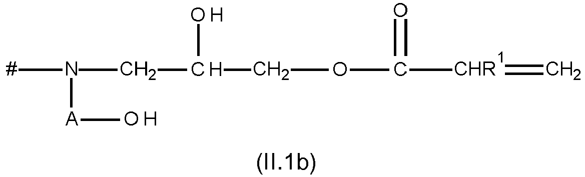 wherein
- X: is O or NR^{a}, where R^{a} is hydrogen, alkyl, cycloalkyl or aryl,
- A: is unsubstituted or substituted C₁-C₂₀-alkylene which may be interrupted by one or more nonadjacent groups which are selected from -O- and -S-, and
- #: represents the bonding site to a carbon atom of the polysaccharide.

In a preferred embodiment, the ethylenically unsaturated polysaccharide comprises additionally at least one group of the formula #-X-A-OH, wherein
- X: is O or NR^{a}, where R^{a} is hydrogen, alkyl, cycloalkyl or aryl,
- A: is unsubstituted or substituted C₁-C₂₀-alkylene which may be interrupted by one or more nonadjacent groups which are selected from -O- and -S-, and
- #: represents the bonding site to a carbon atom of the polysaccharide.

With regard to suitable and preferred embodiments of X, A and NR^{a}, reference is made to the afore-mentioned suitable and preferred embodiments.

The ethylenically unsaturated polysaccharides according to the invention are obtainable by the process of the invention.

Preferably, the ethylenically unsaturated polysaccharides according to the invention or obtainable by the process of the invention have a degree of polymerization (DP) of 10 to 100, preferably 20 to 60, in particular 30 to 50. In a special embodiment, the ethylenically unsaturated polysaccharides have a DP of 10 to 20.

Preferably, the ethylenically unsaturated polysaccharides according to the invention or obtainable by the process of the invention have a DS of groups derived from the compounds of the formula (II) of from 0.02 to 0.1. The DS with groups derived from the compounds of the formula (II) can be determined by methanolysis of the ethylenically unsaturated polysaccharides and analysis of the formed methylmethacrylate by quantitative GC.

Preferably, the ethylenically unsaturated polysaccharides according to the invention or obtainable by the process of the invention have a DS of groups of the formula #-X-A-OH of from 0 to 0.99.

Preferably, the ethylenically unsaturated polysaccharides according to the invention or obtainable by the process of the invention are essentially free of chlorine atoms. Essentially free of chlorine means that the amount of chlorine atoms in the reaction product of step b) is less than 2% Cl as determined by elemental analysis.

### Polymer P)

In the text below, compounds which can be derived from acrylic acid and methacrylic acid are sometimes referred to for short by adding the syllable "(meth)" to the compound derived from acrylic acid.

The invention further provides a polymer P) comprising copolymerized units of
α) at least one ethylenically unsaturated polysaccharide as defined above or obtainable by the process as defined above,
β) optionally at least one ethylenically unsaturated monomer different from component α).

### Monomer β)

Preferably, monomers β) are selected from
a) esters of α,β-ethylenically unsaturated monocarboxylic and dicarboxylic acids with C₁-C₂₀ alkanols,
b) compounds with a free-radically polymerizable, α,β-ethylenically unsaturated double bond and at least one cationogenic and/or cationic group per molecule,
c) compounds with a free-radically polymerizable, α,β-ethylenically unsaturated double bond and at least one anionogenic and/or anionic group per molecule,
d) esters of vinyl alcohol and allyl alcohol with C₁-C₃₀ monocarboxylic acids,
e) amide group containing monomers,
f) esters of α,β-ethylenically unsaturated monocarboxylic and dicarboxylic acids with C₂-C₃₀ alkanediols, amides of α,β-ethylenically unsaturated monocarboxylic and dicarboxylic acids with C₂-C₃₀ amino alcohols which contain a primary or secondary amino group,
g) phosphorus monomers,
h) vinyl ethers, polyether (meth)acrylates,
i) vinylaromatics,
k) ethylenically unsaturated nitriles,
l) vinyl halides, vinylidene halides,
m) C₂-C₈ monoolefins, nonaromatic hydrocarbons having at least two conjugated double bonds,
n) monomers containing urea groups,
o) monomers having crosslinking groups,
and mixtures thereof.

### Monomer a)

Suitable esters a) are based on α,β-ethylenically unsaturated mono- and dicarboxylic acids, as are listed as component c). Preferred monomers a) are C₁-C₂₀-alkyl acrylates and/or C₁-C₂₀-alkyl methacrylates.

Suitable monomers a) are methyl (meth)acrylate, methyl ethacrylate, ethyl (meth)acrylate, ethyl ethacrylate, n-propyl (meth)acrylate, isopropyl (meth)acrylate, n-butyl (meth)acrylate, sec-butyl (meth)acrylate, tert-butyl (meth)acrylate, tert-butyl ethacrylate, n-hexyl (meth)acrylate, n-heptyl (meth)acrylate, n-octyl (meth)acrylate, 1,1,3,3-tetramethylbutyl (meth)acrylate, ethylhexyl (meth)acrylate, n-nonyl (meth)acrylate, n-decyl (meth)acrylate, n-undecyl (meth)acrylate, tridecyl (meth)acrylate, myristyl (meth)acrylate, pentadecyl (meth)acrylate, palmityl (meth)acrylate, heptadecyl (meth)acrylate, nonadecyl (meth)acrylate, arachidyl (meth)acrylate, behenyl (meth)acrylate, lignoceryl (meth)acrylate, cerotinyl (meth)acrylate, melissinyl (meth)acrylate, palmitoleyl (meth)acrylate, oleyl (meth)acrylate, linolyl (meth)acrylate, linolenyl (meth)acrylate, stearyl (meth)acrylate, lauryl (meth)acrylate, and mixtures thereof.

Preferred monomers a) are methyl acrylate, methyl methacrylate, ethyl acrylate, ethyl methacrylate, n-butyl acrylate, n-butyl methacrylate, tert-butyl methacrylate, tert-butyl methacrylate, 2-ethylhexyl acrylate, 2-ethylhexyl methacrylate and mixtures thereof.

The polymers according to the invention can comprise, for example, 1 to 98% by weight, preferably 2 to 90% by weight, based on the total weight of the monomers used for the polymerization, of at least one monomer a) in copolymerized form.

### Monomer b)

The polymers according to the invention can comprise as monomer b) at least one compound with a free-radically polymerizable, α,β-ethylenically unsaturated double bond and at least one cationogenic and/or cationic group per molecule in copolymerized form.

The polymers according to the invention can comprise for example 0.1 to 98% by weight, preferably 0.5 to 90% by weight, based on the total weight of the monomers used for the polymerization, of at least one monomer b) in copolymerized form. In a special embodiment, the copolymers according to the invention can comprise 1 to 30% by weight, preferably 2 to 25% by weight, based on the total weight of the monomers used for the polymerization, of at least one monomer b) in copolymerized form.

The cationogenic and/or cationic groups of component b) are preferably nitrogen-containing groups, such as primary, secondary and tertiary amino groups and also quaternary ammonium groups. The nitrogen-containing groups are preferably tertiary amino groups or quaternary ammonium groups. The monomers b) or their copolymerized repeat units can be present in partially or completely protonated and/or quaternized form. Suitable acids for the protonation are, for example, mineral acids, such as hydrochloric acid, sulfuric acid or phosphoric acid, and carboxylic acids and hydroxycarboxylic acids, such as lactic acid. Suitable quaternizing agents are C₁-C₄-alkyl halides or sulfates, such as ethyl chloride, ethyl bromide, methyl chloride, methyl bromide, dimethyl sulfate and diethyl sulfate. A protonation or quaternization can generally take place either before or after the polymerization.

The component b) is preferably selected from esters of α,β-ethylenically unsaturated mono- and dicarboxylic acids with amino alcohols, which may be mono- or dialkylated on the amine nitrogen, amides of α,β-ethylenically unsaturated mono- and dicarboxylic acids with diamines which have at least one primary or secondary amino group, N,N-diallylamine, N,N-diallyl-N-alkylamines and derivatives thereof, vinyl- and allyl-substituted nitrogen heterocycles, vinyl- and allyl-substituted heteroaromatic compounds, and mixtures thereof.

Preferred compounds b) are the esters of α,β-ethylenically unsaturated mono- and dicarboxylic acids with amino alcohols. Preferred amino alcohols are C₂-C₁₂-amino alcohols which are C₁-C₈-mono- or -dialkylated on the amine nitrogen. Of suitability as acid component of these esters are, for example, acrylic acid, methacrylic acid, fumaric acid, maleic acid, itaconic acid, crotonic acid, maleic anhydride, monobutyl maleate and mixtures thereof. Preference is given to using acrylic acid, methacrylic acid and mixtures thereof as acid component.

Preferred monomers b) are N-methylaminoethyl (meth)acrylate, N-ethylaminoethyl (meth)acrylate, N-(n-propyl)aminoethyl (meth)acrylate, N-(tert-butyl)aminoethyl (meth)acrylate, N,N-dimethylaminomethyl (meth)acrylate, N,N-dimethylaminoethyl (meth)acrylate, N,N-diethylaminomethyl (meth)acrylate, N,N-diethylaminoethyl (meth)acrylate, N,N-dimethylaminopropyl (meth)acrylate, N,N-diethylaminopropyl (meth)acrylate and N,N-dimethylaminocyclohexyl (meth)acrylate.

Particular preference is given to N,N-dimethylaminoethyl acrylate, N,N-dimethylaminoethyl methacrylate, the quaternization products and mixtures thereof.

Suitable monomers b) are also the amides of α,β-ethylenically unsaturated mono- or dicarboxylic acids with diamines which have at least one primary or secondary amino group. Suitable α,β-ethylenically unsaturated mono- or dicarboxylic acids are mentioned as component c). Preference is given to diamines which have one tertiary and one primary or secondary amino group.

Preferred monomers b) are, for example, N-[tert-butylaminoethyl](meth)acrylamide, N-[2-(dimethylamino)ethyl]acrylamide, N-[2-(dimethylamino)ethyl]methacrylamide, N-[3-(dimethylamino)propyl]acrylamide, N-[3-(dimethylamino)propyl]methacrylamide, N-[4-(dimethylamino)butyl]acrylamide, N-[4-(dimethylamino)butyl]methacrylamide, N-[2-(diethylamino)ethyl]acrylamide, N-[4-(dimethylamino)cyclohexyl]acrylamide and N-[4-(dimethylamino)cyclohexyl]methacrylamide.

In one suitable embodiment, the component b) comprises at least one N-vinylimidazole compound as vinyl-substituted heteroaromatic compound. In one specific embodiment, component b) is selected from N-vinylimidazole compounds and mixtures which comprise at least one N-vinylimidazole compound.

Suitable N-vinylimidazole compounds are compounds of the formula (III) 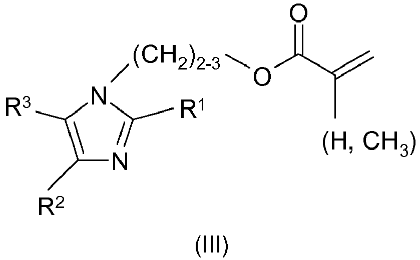 in which R¹ to R³, independently of one another, are hydrogen, C₁-C₄-alkyl or phenyl. Preferably, R¹ to R³ are hydrogen.

Also suitable are N-vinylimidazole compounds of the general formula (IV) 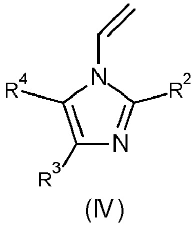 in which R² to R⁴, independently of one another, are hydrogen, C₁-C₄-alkyl or phenyl.

Examples of compounds of the general formula (IV) are given in table 1 below:

**Table 1**

| R² | R³ | R⁴ |
|---|---|---|
| H | H | H |
| Me | H | H |
| H | Me | H |
| H | H | Me |
| Me | Me | H |
| H | Me | Me |
| Me | H | Me |
| Ph | H | H |
| H | Ph | H |
| H | H | Ph |
| Ph | Me | H |
| Ph | H | Me |
| Me | Ph | H |
| H | Ph | Me |
| H | Me | Ph |
| Me | H | Ph |

| | | |
|---|---|---|
| Me = methyl Ph = phenyl | | |

As monomer b), preference is given to 1-vinylimidazole (N-vinylimidazole) and mixtures which comprise N-vinylimidazole.

Suitable monomers b) are also the compounds obtainable by partially or complete protonation or by partially or complete quaternization of the aforementioned N-vinylimidazole compounds. Examples of such charged monomers b) are quaternized vinylimidazoles, in particular 3-methyl-1-vinylimidazolium chloride, methosulfate and ethosulfate. Suitable acids and alkylating agents are those listed previously.

Suitable monomers b) are also vinyl- and allyl-substituted nitrogen heterocycles different from vinylimidazoles, such as 2- and 4-vinylpyridine, 2- and 4-allylpyridine, and the salts thereof.

Monomer b) is preferably selected from N-vinyl-imidazole, quaternized N-vinylimidazole, N,N dimethylaminoethyl (meth)acrylate, quaternized N,N-dimethylaminoethyl (meth)acrylate, N-[3-(dimethylamino)¬propyl]-(meth)acrylamide, quaternized N-[3-(dimethylamino)propyl](meth)acrylamide and mixtures thereof.

### Monomer c)

The polymers according to the invention can comprise for example 0.1 to 98% by weight, preferably 0.5 to 90% by weight, based on the total weight of the monomers used for the polymerization, of at least one monomer c) in copolymerized form. In a special embodiment, the copolymers according to the invention can comprise 1 to 30% by weight, preferably 2 to 25% by weight, based on the total weight of the monomers used for the polymerization, of at least one monomer c) in copolymerized form. Monomer c) preferably comprises at least one compound selected from monoethylenically unsaturated carboxylic acids, sulfonic acids, phosphonic acids and mixtures thereof.

Monomers c) include monoethylenically unsaturated mono- and dicarboxylic acids having 3 to 25, preferably 3 to 6, carbon atoms, which can also be used in the form of their salts or anhydrides. Examples thereof are acrylic acid, methacrylic acid, ethacrylic acid, α-chloroacrylic acid, crotonic acid, maleic acid, maleic anhydride, itaconic acid, citraconic acid, mesaconic acid, glutaconic acid, aconitic acid and fumaric acid. The monomers c) also include the half-esters of monoethylenically unsaturated dicarboxylic acids having 4 to 10, preferably 4 to 6, carbon atoms, e.g. of maleic acid, such as monomethyl maleate. The monomers c) also include monoethylenically unsaturated sulfonic acids and phosphonic acids, for example vinylsulfonic acid, allylsulfonic acid, sulfoethyl acrylate, sulfoethyl methacrylate, sulfopropyl acrylate, sulfopropyl methacrylate, 2-hydroxy-3-acryloxypropylsulfonic acid, 2-hydroxy-3-methacryloxypropyl sulfonic acid, styrenesulfonic acid, 2-acrylamido-2-methylpropanesulfonic acid, vinylphosphonic acid and allylphosphonic acid. The monomers c) also include the salts of the abovementioned acids, in particular the sodium, potassium and ammonium salts, and the salts with amines. The monomers c) can also be used as they are or as mixtures with one another. The stated weight fractions all refer to the acid form.

Monomer c) preferably comprises at least one compound selected from acrylic acid, methacrylic acid, ethacrylic acid, α-chloroacrylic acid, crotonic acid, maleic acid, maleic anhydride, fumaric acid, itaconic acid, citraconic acid, mesaconic acid, glutaconic acid, aconitic acid, 2-acrylamido-2-methylpropanesulfonic acid, vinylphosphonic acid and mixtures thereof.

Monomer c) particularly comprises at least one compound selected from acrylic acid, methacrylic acid and mixtures thereof.

### Monomer d)

Suitable esters of vinyl alcohol with C₁-C₃₀ monocarboxylic acids are, for example, vinyl formate, vinyl acetate, vinyl propionate, vinyl butyrate, vinyl laurate, vinyl stearate, vinyl propionate, Versatic acid vinyl esters, and mixtures thereof.

The polymers according to the invention can comprise for example 0.1 to 50% by weight, preferably 0.5 to 40% by weight, based on the total weight of the monomers used for the polymerization, of at least one monomer d) in copolymerized form. In a special embodiment, the copolymers according to the invention can comprise 1 to 30% by weight, preferably 2 to 25% by weight, based on the total weight of the monomers used for the polymerization, of at least one monomer d) in copolymerized form.

### Monomer e)

The polymers of the invention can comprise, in copolymerized form, at least one amide-group-containing monomer e) of the general formula (V) 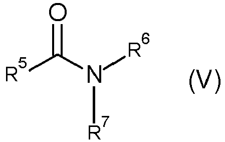 where
one of the radicals R⁵ to R⁷ is a group of the formula CH₂=CR⁸- where R⁸ = H or C₁-C₄-alkyl and the other radicals R⁵ to R⁷, independently of one another, are hydrogen, alkyl, cycloalkyl, heterocycloalkyl, aryl or hetaryl,
where R⁵ and R⁶, together with the amide group to which they are bonded, may also be a lactam having 5 to 8 ring atoms,
where R⁶ and R⁷, together with the nitrogen atom to which they are bonded, may also be a five- to seven-membered heterocycle.

Preferably, the radicals R⁵ to R⁷ different from a group of the formula CH₂=CR⁸- are independently of one another selected from hydrogen, C₁-C₂₀-alkyl, C₃-C₈-cycloalkyl, C₃-C₈-heterocycloalkyl, C₆-C₁₄-aryl or C₅-C₁₄-hetaryl.

Preferably, the compounds of the component e) are selected from primary amides of α,β-ethylenically unsaturated monocarboxylic acids, N-vinylamides of saturated monocarboxylic acids, N-vinyllactams, N-alkyl- and N,N-dialkylamides of α,β-ethylenically unsaturated monocarboxylic acids and mixtures thereof.

Preferred monomers e) are N-vinyllactams and derivatives thereof which can have e.g. one or more alkyl substituents, such as methyl, ethyl, n-propyl, isopropyl, n-butyl, sec-butyl, tert-butyl, etc. These include e.g. N-vinylpyrrolidone, N-vinylpiperidone, N-vinylcaprolactam, N-vinyl-5-methyl-2-pyrrolidone, N-vinyl-5-ethyl-2-pyrrolidone, N-vinyl-6-methyl-2-piperidone, N-vinyl-6-ethyl-2-piperidone, N-vinyl-7-methyl-2-caprolactam, N-vinyl-7-ethyl-2-caprolactam, etc.

Particular preference is given to using N-vinylpyrrolidone and/or N-vinylcaprolactam.

Suitable monomers e) are also acrylamide and methacrylamide.

Suitable N-alkyl- and N,N-dialkylamides of α,β-ethylenically unsaturated monocarboxylic acids are, for example, N-methyl(meth)acrylamide, N-ethyl(meth)acrylamide, N-propyl(meth)acrylamide, N-(n-butyl)(meth)acrylamide, N-tert-butyl(meth)acrylamide, n-pentyl(meth)acrylamide, n-hexyl(meth)acrylamide, n-heptyl(meth)acrylamide, N,N-dimethyl(meth)acrylamide, N,N-diethyl(meth)acrylamide, piperidinyl-(meth)acrylamide, morpholinyl(meth)acrylamide, n-octyl(meth)acrylamide, 1,1,3,3-tetramethylbutyl(meth)acrylamide, ethylhexyl(meth)acrylamide, n-nonyl(meth)-acrylamide, n-decyl(meth)acrylamide, n-undecyl(meth)acrylamide, tridecyl-(meth)acrylamide, myristyl(meth)acrylamide, pentadecyl(meth)acrylamide, palmityl(meth)acrylamide, heptadecyl(meth)acrylamide, nonadecyl(meth)acrylamide, arachinyl(meth)acrylamide, behenyl(meth)acrylamide, lignocerenyl(meth)acrylamide, cerotinyl(meth)acrylamide, melissinyl(meth)acrylamide, palmitoleinyl(meth)acrylamide, oleyl(meth)acrylamide, linolyl(meth)acrylamide, linolenyl(meth)acrylamide, stearyl(meth)acrylamide, lauryl(meth)acrylamide, N-methyl-N-(n-octyl)(meth)-acrylamide, N,N-di(n-octyl)(meth)acrylamide and mixtures thereof.

Open-chain N-vinylamide compounds suitable as monomers e) are for example N-vinylformamide, N-vinyl-N-methylformamide, N-vinylacetamide, N-vinyl-N-methylacetamide, N-vinyl-N-ethylacetamide, N-vinylpropionamide, N-vinyl-N-methylpropionamide, N-vinylbutyramide and mixtures thereof. Preference is given to using N-vinylformamide.

The polymers according to the invention can comprise for example 0.1 to 80% by weight, preferably 0.5 to 50% by weight, based on the total weight of the monomers used for the polymerization, of at least one monomer e) in copolymerized form. In a special embodiment, the copolymers according to the invention can comprise 1 to 40% by weight, preferably 2 to 30% by weight, based on the total weight of the monomers used for the polymerization, of at least one monomer e) in copolymerized form.

### Monomer f)

Preferred monomers f) are hydroxy-C₁-C₂₀-alkyl (meth)acrylates. These include 2-hydroxyethyl acrylate, 2-hydroxyethyl methacrylate, 2-hydroxyethyl ethacrylate, 2-hydroxypropyl acrylate, 2-hydroxypropyl methacrylate, 3-hydroxypropyl acrylate, 3-hydroxypropyl methacrylate, 3-hydroxybutyl acrylate, 3-hydroxybutyl methacrylate, 4-hydroxybutyl acrylate, 4-hydroxybutyl methacrylate, 6-hydroxyhexyl acrylate, 6-hydroxyhexyl methacrylate, 3-hydroxy-2-ethylhexyl acrylate, 3-hydroxy-2-ethylhexyl methacrylate, etc.

Preferred monomers f) are also hydroxy-C₁-C₂₀-alkyl(meth)acrylamides. These include 2-hydroxyethylacrylamide, 2-hydroxyethylmethacrylamide, 2-hydroxyethyl-ethacrylamide, 2-hydroxypropylacrylamide, 2-hydroxypropylmethacrylamide, 3-hydroxypropylacrylamide, 3-hydroxypropylmethacrylamide, 3-hydroxybutyl-acrylamide, 3-hydroxybutylmethacrylamide, 4-hydroxybutylacrylamide, 4-hydroxybutylmethacrylamide, 6-hydroxyhexylacrylamide, 6-hydroxyhexyl-methacrylamide, 3-hydroxy-2-ethylhexylacrylamide and 3-hydroxy-2-ethylhexyl-methacrylamide.

The polymers according to the invention can comprise for example 0.1 to 50% by weight, preferably 0.5 to 40% by weight, based on the total weight of the monomers used for the polymerization, of at least one monomer f) in copolymerized form. In a special embodiment, the copolymers according to the invention can comprise 1 to 30% by weight, preferably 2 to 25% by weight, based on the total weight of the monomers used for the polymerization, of at least one monomer f) in copolymerized form.

### Monomer g)

Examples of phosphorus monomers g) are the monoesters and diesters of phosphonic acid and phosphoric acid with hydroxyalkyl (meth)acrylates, especially the monoesters. Additionally suitable are diesters of phosphonic acid and phosphoric acid that have been esterified once with a hydroxyalkyl (meth)acrylate and also once with a different alcohol, such as an alkanol, for example. Suitable hydroxyalkyl (meth)acrylates for these esters are those specified below as separate monomers, more particularly 2-hydroxyethyl (meth)acrylate, 3-hydroxypropyl (meth)acrylate, 4-hydroxybutyl (meth)acrylate, etc. Corresponding dihydrogen phosphate ester monomers include phosphoalkyl (meth)acrylates, such as 2-phosphoethyl (meth)acrylate, 2-phosphopropyl (meth)acrylate, 3-phosphopropyl (meth)acrylate, phosphobutyl (meth)acrylate, and 3-phospho-2-hydroxypropyl (meth)acrylate. Also suitable are the esters of phosphonic acid and phosphoric acid with alkoxylated hydroxyalkyl (meth)acrylates, examples being the ethylene oxide condensates of (meth)acrylates, such as H₂C=C(CH₃)COO(CH₂CH₂O)ₙP(OH)₂ and H₂C=C(CH₃)COO(CH₂CH₂O)ₙP(=O)(OH)₂, in which n is 1 to 50. Of further suitability are phosphoalkyl crotonates, phosphoalkyl maleates, phosphoalkyl fumarates, phosphodialkyl (meth)acrylates, phosphodialkyl crotonates and allyl phosphates. Further suitable monomers containing phosphorus groups are described in WO 99/25780 and US 4,733,005, hereby incorporated by reference.

The polymers according to the invention can comprise for example 0.1 to 30% by weight, preferably 0.5 to 25% by weight, based on the total weight of the monomers used for the polymerization, of at least one monomer g) in copolymerized form.

### Monomer h)

Suitable C₁-C₃₀-alkyl vinyl ethers h) are, for example, methyl vinyl ether, ethyl vinyl ether, n-propyl vinyl ether, isopropyl vinyl ether, n-butyl vinyl ether, tert-butyl vinyl ether, n-pentyl vinyl ether, n-hexyl vinyl ether, n-heptyl vinyl ether, n-octyl vinyl ether, 1,1,3,3-tetramethyl butyl vinyl ether, ethylhexyl vinyl ether, n-nonyl vinyl ether, n-decyl vinyl ether, n-undecyl vinyl ether, tridecyl vinyl ether, myristyl vinyl ether, pentadecyl vinyl ether, palmityl vinyl ether, heptadecyl vinyl ether, octadecyl vinyl ether, nonadecyl vinyl ether, arrachinyl vinyl ether, behenyl vinyl ether, lignocerenyl vinyl ether, cerotinyl vinyl ether, melissinyl vinyl ether, palmitoleinyl vinyl ether, oleyl vinyl ether, linolyl vinyl ether, linolenyl vinyl ether, stearyl vinyl ether, lauryl vinyl ether and mixtures thereof.

Suitable polyether (meth)acrylates h) are compounds of the general formula (VI) 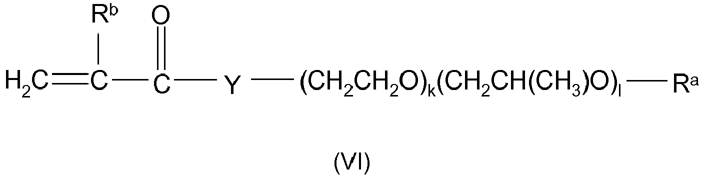 in which
the sequence of the alkylene oxide units is arbitrary,
k and I independently of one another are an integer from 0 to 100, the sum of k and I being at least 3,
R^{a} is hydrogen, C₁-C₃₀ alkyl, C₅-C₈ cycloalkyl or C₆-C₁₄ aryl,
R^{b} is hydrogen or C₁-C₈ alkyl,
Y is O or NR^{c}, where R^{c} is hydrogen, C₁-C₃₀ alkyl or C₅-C₈ cycloalkyl.

Preferably, k is an integer from 3 to 50, more particularly 4 to 25. Preferably, I is an integer from 3 to 50, more particularly 4 to 25.

Preferably, R^{a} in the formula (VI) is hydrogen, methyl, ethyl, n-propyl, isopropyl, n-butyl, sec-butyl, n-pentyl, n-hexyl, octyl, 2-ethylhexyl, decyl, lauryl, palmityl or stearyl.

Preferably, R^{b} is hydrogen, methyl, ethyl, n-propyl, isopropyl, n-butyl, sec-butyl, tert-butyl, n-pentyl or n-hexyl, more particularly hydrogen, methyl or ethyl. With particular preference R^{b} is hydrogen or methyl.

Preferably, Y in the formula (VI) is O.

Examples of suitable polyether (meth)acrylates are the polycondensation products of the aforementioned α,β-ethylenically unsaturated monocarboxylic and/or dicarboxylic acids c) and their acid chlorides, acid amides, and acid anhydrides with polyetherols. Suitable polyetherols are readily preparable by reaction of ethylene oxide, 1,2-propylene oxide and/or epichlorohydrin with a starter molecule, such as water or a short-chain alcohol R^{a}-OH. The alkylene oxides can be used individually, in alternation in succession or as a mixture. The polyether acrylates can be used alone or in mixtures for preparing the emulsion polymers employed in accordance with the invention.

The polymers according to the invention can comprise for example 0.1 to 30% by weight, preferably 0.5 to 25% by weight, based on the total weight of the monomers used for the polymerization, of at least one monomer h) in copolymerized form.

### Monomer i)

Preferred vinylaromatics i) are styrene, 2-methylstyrene, 4-methylstyrene, 2-(n-butyl)styrene, 4-(n-butyl)styrene and 4-(n-decyl)styrene. Preferred are styrene and 2-methylstyrene, in particular styrene.

The polymers according to the invention can comprise for example 0.1 to 30% by weight, preferably 0.5 to 25% by weight, based on the total weight of the monomers used for the polymerization, of at least one monomer i) in copolymerized form.

### Monomer k)

Suitable ethylenically unsaturated nitriles k) are acrylonitrile, methacrylonitrile, and mixtures thereof.

The polymers according to the invention can comprise for example 0.1 to 30% by weight, preferably 0.5 to 25% by weight, based on the total weight of the monomers used for the polymerization, of at least one monomer k) in copolymerized form.

### Monomer I)

Suitable vinyl halides and vinylidene halides I) are vinyl chloride, vinylidene chloride, vinyl fluoride, vinylidene fluoride, and mixtures thereof.

The polymers according to the invention can comprise for example 0.1 to 30% by weight, preferably 0.5 to 25% by weight, based on the total weight of the monomers used for the polymerization, of at least one monomer I) in copolymerized form.

### Monomer m)

Suitable C₂-C₈ monoolefins and nonaromatic hydrocarbons having at least two conjugated double bonds are, for example, ethylene, propylene, isobutylene, isoprene, butadiene, etc.

The polymers according to the invention can comprise for example 0.1 to 30% by weight, preferably 0.5 to 25% by weight, based on the total weight of the monomers used for the polymerization, of at least one monomer m) in copolymerized form.

### Monomer n)

Examples of suitable monomers n) containing urea groups are N-vinylurea or N-allylurea or derivatives of imidazolidin-2-one. They include N-vinyl- and N-allylimidazolidin-2-one, N-vinyloxyethylimidazolidin-2-one, N-(2-(meth)acrylamidoethyl)imidazolidin-2-one, N-(2-(meth)acryloxyethyl)imidazolidin-2-one (i.e., 2-ureido (meth)acrylate), N-[2-((meth)acryloxyacetamido)ethyl]imidazolidin-2-one, etc.

Preferred monomers containing urea groups are N-(2-acryloxyethyl)imidazolidin-2-one and N-(2-methacryloxyethyl)imidazolidin-2-one. Particular preference is given to N-(2-methacryloxyethyl)imidazolidin-2-one (2-ureidomethacrylate, UMA).

The polymers according to the invention can comprise for example 0.1 to 30% by weight, preferably 0.5 to 25% by weight, based on the total weight of the monomers used for the polymerization, of at least one monomer n) in copolymerized form.

### Monomer o)

In a suitable embodiment, the copolymer according to the invention comprises at least one monomer o) having crosslinking groups, i.e. a compound with two or more than two ethylenically unsaturated, nonconjugated double bonds.

Preferably, monomer o) having crosslinking groups are used in an amount of from 0.01 to 5% by weight, particularly preferably 0.1 to 4% by weight, based on the total weight of the compounds used for the polymerization.

Suitable monomers o) having crosslinking groups are, for example, acrylic esters, methacrylic esters, allyl ethers or vinyl ethers of at least dihydric alcohols. The OH groups of the parent alcohols here may be completely or partially etherified or esterified; however, the crosslinkers comprise at least two ethylenically unsaturated groups.

Examples of the parent alcohols are dihydric alcohols such as 1,2-ethanediol, 1,2-propanediol, 1,3-propanediol, 1,2-butanediol, 1,3-butanediol, 2,3-butanediol, 1,4-butanediol, but-2-ene-1,4-diol, 1,2-pentanediol, 1,5-pentanediol, 1,2-hexanediol, 1,6-hexanediol, 1,10-decanediol, 1,2-dodecanediol, 1,12-dodecanediol, neopentyl glycol, 3-methylpentane-1,5-diol, 2,5-dimethyl-1,3-hexanediol, 2,2,4-trimethyl-1,3-pentanediol, 1,2-cyclohexanediol, 1,4-cyclohexanediol, 1,4-bis(hydroxymethyl)cyclohexane, hydroxypivalic acid neopentyl glycol monoester, 2,2-bis(4-hydroxyphenyl)propane, 2,2-bis[4-(2-hydroxypropyl)phenyl]propane, diethylene glycol, triethylene glycol, tetraethylene glycol, dipropylene glycol, tripropylene glycol, tetrapropylene glycol, 3-thiapentane-1,5-diol, and also polyethylene glycols, polypropylene glycols and polytetrahydrofurans with molecular weights of in each case 200 to 10 000. Apart from the homopolymers of ethylene oxide and propylene oxide, it is also possible to use block copolymers of ethylene oxide or propylene oxide or copolymers which comprise ethylene oxide and propylene oxide groups in incorporated form. Examples of parent alcohols having more than two OH groups are trimethylolpropane, glycerol, pentaerythritol, 1,2,5-pentanetriol, 1,2,6-hexanetriol, cyanuric acid, sorbitans, sugars such as sucrose, glucose, mannose. The polyhydric alcohols can of course also be used following reaction with ethylene oxide or propylene oxide as the corresponding ethoxylates or propoxylates. The polyhydric alcohols can also firstly be converted to the corresponding glycidyl ethers by reaction with epichlorohydrin. Preference is given to ethylene glycol di(meth)acrylate and polyethylene glycol di(meth)acrylates.

Further suitable monomers o) having crosslinking groups are the vinyl esters or the esters of monohydric, unsaturated alcohols with ethylenically unsaturated C₃-C₆-carboxylic acids, for example acrylic acid, methacrylic acid, itaconic acid, maleic acid or fumaric acid. Examples of such alcohols are allyl alcohol, 1-buten-3-ol, 5-hexen-1-ol, 1-octen-3-ol, 9-decen-1-ol, dicyclopentenyl alcohol, 10-undecen-1-ol, cinnamyl alcohol, citronellol, crotyl alcohol or cis-9-octadecen-1-ol. However, it is also possible to esterify the monohydric, unsaturated alcohols with polybasic carboxylic acids, for example malonic acid, tartaric acid, trimellitic acid, phthalic acid, terephthalic acid, citric acid or succinic acid.

Further suitable monomers o) having crosslinking groups are esters, different from (meth)acrylates, of unsaturated carboxylic acids with the polyhydric alcohols described above, for example oleic acid, crotonic acid, cinnamic acid or 10-undecenoic acid.

Suitable as monomers o) having crosslinking groups are, moreover, straight-chain or branched, linear or cyclic, aliphatic or aromatic hydrocarbons which have at least two double bonds which, in the case of aliphatic hydrocarbons, must not be conjugated, e.g. divinylbenzene, divinyltoluene, 1,7-octadiene, 1,9-decadiene, 4-vinyl-1-cyclohexene, trivinylcyclohexane or polybutadienes with molecular weights of from 200 to 20 000.

Also suitable as monomers o) having crosslinking groups are the acrylamides, methacrylamides and N-allylamines of at least difunctional amines. Such amines are, for example, 1,2-diaminoethane, 1,3-diaminopropane, 1,4-diaminobutane, 1,6-diaminohexane, 1,12-dodecanediamine, piperazine, diethylenetriamine or isophoronediamine. Likewise suitable are the amides of allylamine and unsaturated carboxylic acids, such as acrylic acid, methacrylic acid, itaconic acid, maleic acid or at least dibasic carboxylic acids, as have been described above.

Also suitable as monomers o) having crosslinking groups are triallylamine and triallylmonoalkylammonium salts, e.g. triallylmethylammonium chloride or methylsulfate.

Also suitable are N-vinyl compounds of urea derivatives, at least difunctional amides, cyanurates or urethanes, for example of urea, ethyleneurea, propyleneurea or tartardiamide, e.g. N,N'-divinylethyleneurea or N,N'-divinylpropyleneurea.

Further suitable monomers o) having crosslinking groups are divinyldioxane, tetraallylsilane or tetravinylsilane.

Mixtures of the aforementioned monomers o) having crosslinking groups can of course also be used.

The aforementioned monomers o) may be used individually, in the form of mixtures within one class of monomer, or in the form of mixtures from different classes of monomer.

The polymers P) according to the invention are prepared for example analogously to the processes described in general in "Ullmann's Encyclopedia of Industrial Chemistry, Sixth Edition, 2000, Electronic Release, keyword: Polymerisation Process". The (co)polymerization preferably takes place as free-radical polymerization in the form of solution polymerization, suspension polymerization, precipitation polymerization, emulsion polymerization or by bulk polymerization (i.e. without solvent).

For the polymerization, a suitable polymerization initiator is used. Thermally activatable free-radical polymerization initiators are preferred.

Suitable thermally activatable free-radical initiators are primarily those of the peroxy and azo type. These include, inter alia, hydrogen peroxide, peracetic acid, t-butyl hydroperoxide, di-t-butyl peroxide, dibenzoyl peroxide, benzoyl hydroperoxide, 2,4-dichlorbenzoyl peroxide, 2,5-dimethyl-2,5-bis(hydroperoxy)hexane, perbenzoic acid, t-butyl peroxypivalate, t-butyl peracetate, dilauroyl peroxide, dicapryloyl peroxide, distearoyl peroxide, dibenzoyl peroxide, diisopropyl peroxydicarbonate, didecyl peroxydicarbonate, dieicosyl peroxydicarbonate, di-t-butyl perbenzoate, azobisisobutyronitrile, 2,2'-azobis-2,4-dimethylvaleronitrile, water-soluble azo initiators, e.g. 2,2'-azobis[2-(2-imidazolin-2-yl)propane] dihydrochloride, 2,2'-azobis(2-methyl-propionamidine) dihydrochloride, 2,2'-azobis(1-imino-1-pyrrolidino-2-ethylpropane) dihydrochloride, 2,2'-azobis[2-methyl-N-(2-hydroxyethyl)propionamide]; ammonium persulfate, potassium persulfate, sodium persulfate and sodium perphosphate.

The persulfates (peroxodisulfates), in particular sodium persulfate and water-soluble azo initiators, in particular 2'-azobis[2-(2-imidazolin-2-yl)propane] dihydrochloride are most preferred.

While carrying out the polymerization, the initiator is used in an adequate amount to initiate the polymerization reaction. The initiator is usually used in an amount of from about 0.01 to 3% by weight, based on the total weight of the monomers used. The amount of initiator is preferably about 0.05 to 2% by weight and in particular 0.1 to 1 % by weight, based on the total weight of the monomers used.

According to another preferred type of preparation, the copolymer is obtained by polymerization of a monomer mixture in the presence of a redox initiator system. A redox initiator system comprises at least one oxidizing agent component and at least one reducing agent component, where, in the reaction medium, preferably heavy metal ions are additionally present as catalyst, for example cerium salts, manganese salts or iron(II) salts.

Suitable oxidizing agent components are, for example, peroxides and/or hydroperoxides, such as hydrogen peroxide, tert-butyl hydroperoxide, cumene hydroperoxide, pinane hydroperoxide, diisopropylphenyl hydroperoxide, dicyclohexyl percarbonate, dibenzoyl peroxide, dilauroyl peroxide and diacetyl peroxide. Hydrogen peroxide and tert-butyl hydroperoxide are preferred.

Suitable reducing agent components are alkali metal sulfites, alkali metal dithionites, alkalimetal hyposulfites, sodium hydrogensulfite, Rongalit C (sodium formaldehyde sulfoxylate), mono- and dihydroxyacetone, sugars (e.g. glucose or dextrose), ascorbic acid and its salts, acetone bisulfite adduct and/or an alkali metal salt of hydroxymethanesulfinic acid. Ascorbic acid is preferred.

Also suitable as reducing agent component or catalyst are iron(II) salts, such as e.g. iron(II) sulfate, tin(II) salts, such as e.g. tin(II) chloride, titanium(III) salts, such as titanium(III) sulfate.

The use amounts of oxidizing agent are 0.001 to 5.0% by weight, preferably from 0.005 to 1.0% by weight and particularly preferably from 0.01 to 0.5% by weight, based on the total weight of the monomers used. Reducing agents are used in amounts of from 0.001 to 2.0% by weight, preferably from 0.005 to 1.0% by weight and particularly preferably from 0.01 to 0.5% by weight, based on the total weight of the monomers used.

A particularly preferred redox initiator system is the system sodium peroxodisulfate/ascorbic acid. A further particular redox initiator system is the system t-butyl hydroperoxide/hydrogen peroxide/ascorbic acid, e.g. 0.001 to 5.0% by weight of t-butyl hydroperoxide.

In a first preferred embodiment, the polymerization preferably takes place as a solution polymerization.

The solution polymerization generally takes place in water or in a mixture of at least one organic solvent with water or in an organic solvent or solvent mixture, preferably in water or in a mixture of at least one organic solvent with water. Suitable organic solvents are those which have at least limited miscibility with water at 20°C, and are in particular completely miscible with water at 20°C. This is understood as meaning a miscibility of at least 10 vol% solvent, in particular at least 50 vol% solvent in water at 20°C. By way of example, mention may be made of C₁-C₃-alcohols, e.g. methanol, ethanol, propanol, isopropanol, ketones such as acetone, methyl ethyl ketone, mono-, oligo- or polyalkylene glycols or thioglycols which have C₂-C₆-alkylene units, such as ethylene glycol, 1,2- or 1,3-propylene glycol, 1,2- or 1,4-butylene glycol, C₁-C₄-alkyl ethers of polyhydric alcohols, such as ethylene glycol monomethyl or monoethyl ethers, diethylene glycol monomethyl or monoethyl ethers, diethylene glycol monobutyl ether (butyl diglycol) or triethylene glycol monomethyl or monoethyl ethers, C₁-C₄-alkyl esters of polyhydric alcohols, γ-butyrolactone or dimethyl sulfoxide or tetrahydrofuran. Preference is given to mixtures of the organic solvents with water, in which case the water content can be up to 95% by weight. Particular preference is given to mixtures of methanol with water.

The solution polymerization usually takes place at 35 to 95°C. It can be carried out either as a batch process or else in the form of a feed process. Preference is given to the feed procedure in which at least some of the polymerization initiator and optionally some of the monomers are introduced as initial charge and heated to the polymerization temperature and then the remainder of the polymerization batch is introduced, usually via two or more separate feeds, of which one or more comprise the monomers in pure, dissolved or emulsified form, continuously or stepwise to maintain the polymerization. Preferably, the monomer feed takes place in the form of an aqueous monomer emulsion. In parallel to the monomer feed, further polymerization initiator can be metered in.

In a further preferred embodiment, the preparation of the polymer P) takes place by the method of precipitation polymerization. For this polymerization, solvents are used in which the starting materials for the polymerization are soluble and the polymer which is formed is insoluble. Preference is given to using an anhydrous aprotic solvent or solvent mixture. Suitable solvents are, for example, aromatic hydrocarbons such as toluene, xylenes, benzene; aliphatic and cycloaliphatic hydrocarbons such as n-alkanes or cyclohexane; esters of acetic acid such as ethyl acetate or butyl acetate; ethers, such as, for example, diethyl ether, dipropyl ether, dibutyl ether, methyl tert-butyl ether or diethylene glycol dimethyl ether; ketones such as acetone or methyl ethyl ketone, and mixtures of these solvents.

During the polymerization, chain transfer agents can optionally be used. Typical chain transfer agents comprise mercaptans, such as, for example, 2-mercaptoethanol, thioglycolic acid, n-dodecyl mercaptan and tert-dodecyl mercaptan, alpha-methylstyrene dimer, 1-phenylbutene-2-fluorene, terpinol and chloroform.

Preference is given to a polymer A) which comprises, in copolymerized form,
- 1 to 100% by weight ethylenically unsaturated polysaccharide,
- 0 to 40% by weight of at least one monomer a) which is preferably chosen from C₁-C₆-(meth)acrylates, in particular methyl (meth)acrylate, ethyl (meth)acrylate, n-butyl (meth)acrylate and mixtures thereof,
- 0 to 95% by weight of at least one compound b) which is chosen from N-vinylimidazole compounds, N-[3-(dimethylamino)propyl]acrylamide, N-[3-(dimethylamino)propyl]methacrylamide and mixtures thereof,
- 0 to 95% by weight of at least one compound c) having a free-radically polymerizable α,β-ethylenically unsaturated double bond and at least one anionogenic and/or anionic group per molecule, preferably acrylic acid and/or methacrylic acid,
- 0 to 95% by weight of at least one amide-containing monomer e), preferably vinylpyrrolidone and/or vinylcaprolactam,
- 0 to 40% by weight of at least one compound which is preferably chosen from C₈-C₂₂-(meth)acrylates a), C₈-C₂₂-alkyl vinyl ethers h), polyether (meth)acrylates terminated with C₈-C₂₂-alkyl groups h), allyl alcohol alkoxylates terminated with C₈-C₂₂-alkyl groups h), C₈-C₂₂-carboxylic acid vinyl esters d) and mixtures thereof,
- 0 to 5% by weight of at least one crosslinker o), preferably ethylene glycol di(meth)acrylate and/or pentaerythritol triallyl ether.

A first special embodiment are polymers P) which consist of repeat units of
- ethylenically unsaturated polysaccharide,
- at least one compound selected from
   N,N-dimethylaminoethyl (meth)acrylate,
   N-[3-(dimethylamino)propyl](meth)acrylamide,
   N-(tert-butyl)aminoethyl (meth)acrylate,
   N-vinylimidazole and mixtures thereof,
- N-vinylpyrrolidone and/or N-vinylcaprolactam.

According to the first special embodiment, preferably the cationic monomers are at least partly in quaternized form.

Particular preference is given to polymers P) which consist of repeat units of
- ethylenically unsaturated polysaccharide,
- N-vinylimidazole,
- N-vinylpyrrolidone and/or N-vinylcaprolactam,
where the N-vinylimidazole may be partially or completely quaternized.

A second special embodiment are polymers P) which consist of repeat units of
- ethylenically unsaturated polysaccharide,
- at least one compound selected from
   N,N-dimethylaminoethyl (meth)acrylate,
   N-[3-(dimethylamino)propyl](meth)acrylamide,
   N-(tert-butyl)aminoethyl (meth)acrylate,
   N-vinylimidazole and mixtures thereof,
- at least one crosslinking monomer with two α,β-ethylenically unsaturated double bonds per molecule.

According to the second special embodiment, preferably the cationic monomers are at least partly in quaternized form.

Particular preference is given to polymers P) which consist of repeat units of
- ethylenically unsaturated polysaccharide,
- N-vinylimidazole,
- ethylene glycol di(meth)acrylate and/or pentaerythritol triallyl ether,
where the N-vinylimidazole can be partially or completely quaternized.

A third special embodiment are polymers P) which consist of repeat units of
- ethylenically unsaturated polysaccharide,
- methacrylic acid and/or acrylic acid,
- at least one compound chosen from N-vinylimidazole,
   N-[3-(dimethylamino)propyl]acrylamide,
   N-[3-(dimethylamino)propyl]methacrylamide and mixtures thereof,
- at least one crosslinker, preferably ethylene glycol di(meth)acrylate and/or pentaerythritol triallyl ether.

A fourth special embodiment are polymers P) which consist of repeat units of
- ethylenically unsaturated polysaccharide,
- methacrylic acid and/or acrylic acid,
- vinylpyrrolidone and/or vinylcaprolactam,
- optionally at least one crosslinker, preferably ethylene glycol di(meth)acrylate and/or pentaerythritol triallyl ether.

A fifth special embodiment are polymers P) which consist of repeat units of
- ethylenically unsaturated polysaccharide,
- methacrylic acid and/or acrylic acid,
- vinylpyrrolidone and/or vinylcaprolactam,
- optionally at least one crosslinker, preferably ethylene glycol di(meth)acrylate and/or pentaerythritol triallyl ether,
- at least one further monomer which is chosen from C₁-C₆-(meth)acrylates, in particular methyl (meth)acrylate, ethyl (meth)acrylate, n-butyl (meth)acrylate and mixtures thereof.

### Personal care composition

The invention further provides a personal care composition, comprising
A) at least one polymer P) comprising polymerized units of
   α) at least one ethylenically unsaturated polysaccharide as defined above,
   β) optionally at least one ethylenically unsaturated monomer different from component α).
B) at least one cosmetically acceptable or pharmaceutically acceptable carrier.

With regard to suitable and preferred embodiments of compounds α) and β) reference is made to the afore-mentioned disclosure.

Suitable personal care compositions are cosmetic compositions and hygiene compositions. With regard to suitable and preferred embodiments of the imidazolium compound A), reference is made to the general definition of the imidazolium compound as defined above.

The personal care compositions according to the invention preferably have a cosmetically or pharmaceutically acceptable carrier B) which is selected from
i) water,
ii) water-miscible organic solvents, preferably C₂-C₄-alkanols, in particular ethanol,
iii) oils, fats, waxes,
iv) esters of C₆-C₃₀-monocarboxylic acids with mono-, di- or trihydric alcohols different from iii),
v) saturated acyclic and cyclic hydrocarbons,
vi) fatty acids,
vii) fatty alcohols,
viii) propellant gases,
and mixtures thereof.

The compositions according to the invention have, for example, an oil or fat component B) which is selected from: hydrocarbons of low polarity, such as mineral oil; linear saturated hydrocarbons, preferably having more than 8 carbon atoms, such as tetradecane, hexadecane, octadecane etc.; cyclic hydrocarbons, such as decahydronaphthalene; branched hydrocarbons; animal and vegetable oils; waxes; wax esters; vaseline; esters, preferably esters of fatty acids, such as, for example, the esters of C₁-C₂₄-monoalcohols with C₁-C₂₂-monocarboxylic acids, such as isopropyl isostearate, n-propyl myristate, isopropyl myristate, n-propyl palmitate, isopropyl palmitate, hexacosanyl palmitate, octacosanyl palmitate, triacontanyl palmitate, dotriacontanyl palmitate, tetratriacontanyl palmitate, hexacosanyl stearate, octacosanyl stearate, triacontanyl stearate, dotriacontanyl stearate, tetratriacontanyl stearate; salicylates, such as C₁-C₁₀-salicylates, e.g. octyl salicylate; benzoate esters, such as C₁₀-C₁₅-alkyl benzoates, benzyl benzoate; other cosmetic esters, such as fatty acid triglycerides, propylene glycol monolaurate, polyethylene glycol monolaurate, C₁₀-C₁₅-alkyl lactates, etc. and mixtures thereof.

Suitable silicone oils B) are, for example, linear polydimethylsiloxanes, poly(methylphenylsiloxanes), cyclic siloxanes and mixtures thereof. The number-average molecular weight of the polydimethylsiloxanes and poly(methylphenylsiloxanes) is preferably in a range from about 1000 to 150 000 g/mol. Preferred cyclic siloxanes have 4- to 8-membered rings. Suitable cyclic siloxanes are commercially available, for example, under the name cyclomethicone.

Preferred oil and fat components B) are selected from paraffin, isoparaffin, paraffin oils and isoparaffin oils; vaseline; natural fats and oils, such as castor oil, soya oil, peanut oil, olive oil, sunflower oil, sesame oil, avocado oil, cocoa butter, almond oil, peach kernel oil, castor oil, cod-liver oil, pig grease, spermaceti, spermaceti oil, sperm oil, wheatgerm oil, macadamia nut oil, evening primrose oil, jojoba oil; fatty alcohols, such as lauryl alcohol, myristyl alcohol, cetyl alcohol, stearyl alcohol, oleyl alcohol, cetyl alcohol; fatty acids, such as myristic acid, stearic acid, palmitic acid, oleic acid, linoleic acid, linolenic acid and saturated, unsaturated and substituted fatty acids different therefrom; waxes, such as beeswax, carnauba wax, candillila wax, spermaceti, and mixtures of the abovementioned oil and fat components.

Suitable cosmetically and pharmaceutically compatible oil and fat components B) are described in Karl-Heinz Schrader, Grundlagen und Rezepturen der Kosmetika [Fundamentals and formulations of cosmetics], 2nd edition, Verlag Huthig, Heidelberg, pp. 319 - 355, to which reference is hereby made.

Suitable hydrophilic carriers B) are selected from water, mono-, di- or polyhydric alcohols having preferably 1 to 8 carbon atoms, such as ethanol, n-propanol, isopropanol, propylene glycol, glycerol, sorbitol, etc.

The cosmetic compositions according to the invention may be skin cosmetic, hair cosmetic, dermatological, hygiene or pharmaceutical compositions. The copolymers described above are particularly suitable as additives for hair and skin cosmetics.

The compositions according to the invention are preferably in the form of a gel, foam, spray, ointment, cream, emulsion, suspension, lotion, milk or paste. If desired, liposomes or microspheres can also be used.

The cosmetically or pharmaceutically active compositions according to the invention can additionally comprise cosmetically and/or dermatologically active ingredients and auxiliaries.

Preferably, the cosmetic compositions according to the invention comprise at least one polymer A) as defined above, at least one carrier B) as defined above and at least one constituent different therefrom which is selected from cosmetically active ingredients, emulsifiers, surfactants, preservatives, perfume oils, thickeners, hair polymers, hair and skin conditioners, graft polymers, water-soluble or dispersible silicone-containing polymers, photoprotective agents, bleaches, gel formers, care agents, colorants, tints, tanning agents, dyes, pigments, consistency regulators, humectants, refatting agents, collagen, protein hydrolysates, lipids, antioxidants, antifoams, antistats, emollients and softeners.

Customary thickeners in formulations of this type are crosslinked polyacrylic acids and derivatives thereof, polysaccharides and derivatives thereof, such as xanthan gum, agar agar, alginates or tyloses, cellulose derivatives, e.g. carboxymethylcellulose or hydroxycarboxymethylcellulose, fatty alcohols, monoglycerides and fatty acids, polyvinyl alcohol and polyvinylpyrrolidone. Preference is given to using nonionic thickeners.

Suitable cosmetically and/or dermatologically active ingredients are, for example, coloring active ingredients, skin and hair pigmentation agents, tints, tanning agents, bleaches, keratin-hardening substances, antimicrobial active ingredients, photofilter active ingredients, repellent active ingredients, hyperemic substances, keratolytic and keratoplastic substances, antidandruff active ingredients, antiphlogistics, keratinizing substances, active ingredients which have an antioxidative effect or act as free-radical scavengers, skin-moisturizing or -humectant substances, refatting active ingredients, antierythamateous or antiallergic active ingredients and mixtures thereof.

Artificially skin-tanning active ingredients which are suitable for tanning the skin without natural or artificial irradiation with UV rays are, for example, dihydroxyacetone, alloxan and walnut shell extract. Suitable keratin-hardening substances are generally active ingredients, as are also used in antiperspirants, such as, for example, potassium aluminum sulfate, aluminum hydroxychloride, aluminum lactate, etc. Antimicrobial active ingredients are used in order to destroy microorganisms and to inhibit their growth and thus serve either as preservative or as deodorizing substance which reduces the formation or the intensity of body odor. These include, for example, customary preservatives known to the person skilled in the art, such as p-hydroxybenzoic acid esters, imidazolidinylurea, formaldehyde, sorbic acid, benzoic acid, salicylic acid, etc. Such deodorizing substances are, for example, zinc ricinoleate, triclosan, undecylenic acid alkyanolamides, triethyl citrate, chlorhexidine etc. Suitable photofilter active ingredients are substances which absorb UV rays in the UV-B and/or UB-A region. Suitable UV filters are, for example, 2,4,6-triaryl-1,3,5-triazines in which the aryl groups can each carry at least one substituent which is preferably selected from hydroxy, alkoxy, specifically methoxy, alkoxycarbonyl, specifically methoxycarbonyl and ethoxycarbonyl and mixtures thereof. Also suitable are p-aminobenzoic acid esters, cinnamic acid esters, benzophenones, camphor derivatives, and pigments which stop UV rays, such as titanium dioxide, talc and zinc oxide. Suitable repellent active ingredients are compounds which are able to keep away or drive away certain animals, in particular insects, from people. These include, for example, 2-ethyl-1,3-hexanediol, N,N-diethyl-m-toluamide etc. Suitable hyperemic substances, which stimulate circulation in the skin, are, for example, essential oils, such as pine, lavender, rosemary, juniper berry, horse chestnut extract, birch leaf extract, hay flower extract, ethyl acetate, camphor, menthol, peppermint oil, rosemary extract, eucalyptus oil, etc. Suitable keratolytic and keratoplastic substances are, for example, salicylic acid, calcium thioglycolate, thioglycolic acid and its salts, sulfur, etc. Suitable antidandruff active ingredients are, for example, sulfur, sulfur polyethylene glycol sorbitan monooleate, sulfur ricinol polyethoxylate, zinc pyrithione, aluminum pyrithione, etc. Suitable antiphlogistics, which counteract skin irritations, are, for example, allantoin, bisabolol, dragosantol, chamomile extract, panthenol, etc.

The compositions according to the invention can comprise, as active ingredient, e.g. as cosmetic and/or pharmaceutical active ingredient, at least one polymer which differs from the polymers A) according to the invention. These include, quite generally, anionic, cationic, amphoteric and neutral polymers.

Examples of anionic polymers are homopolymers and copolymers of acrylic acid and methacrylic acid or salts thereof, copolymers of acrylic acid and acrylamide and salts thereof; sodium salts of polyhydroxycarboxylic acids, water-soluble or water-dispersible polyesters, polyurethanes, e.g. Luviset PUR® from BASF, and polyureas. Particularly suitable polymers are copolymers of t-butyl acrylate, ethyl acrylate, methacrylic acid (e.g. Luvimer® 100P), copolymers of ethyl acrylate and methacrylic acid (e.g. Luvimer® MAE), copolymers of N-tert-butylacrylamide, ethyl acrylate, acrylic acid (Ultrahold® 8, strong), copolymers of vinyl acetate, crotonic acid and, if appropriate, further vinyl esters (e.g. Luviset® grades), maleic anhydride copolymers, if appropriate reacted with alcohol, anionic polysiloxanes, e.g. carboxyfunctional, t-butyl acrylate, methacrylic acid (e.g. Luviskol® VBM), copolymers of acrylic acid and methacrylic acid with hydrophobic monomers, such as, for example, C₄-C₃₀-alkyl esters of (meth)acrylic acid, C₄-C₃₀-alkylvinyl esters, C₄-C₃₀-alkyl vinyl ethers and hyaluronic acid. Examples of anionic polymers are also vinyl acetate/crotonic acid copolymers, as are commercially available, for example, under the names Resyn® (National Starch) and Gafset® (GAF), and vinylpyrrolidone/vinyl acrylate copolymers obtainable, for example, under the trade name Luviflex® (BASF). Further suitable polymers are the vinylpyrrolidone/acrylate terpolymer available under the name Luviflex® VBM-35 (BASF) and sodium sulfonate-containing polyamides or sodium sulfonate-containing polyesters. Also suitable are vinylpyrrolidone/ethyl methacrylate/methacrylic acid copolymers, as are sold by Stepan under the names Stepanhold-Extra and - R1, and the Carboset® grades from BF Goodrich.

Suitable cationic polymers are, for example, cationic polymers with the I NCI name Polyquaternium, e.g. copolymers of vinylpyrrolidone/N-vinylimidazolium salts (Luviquat® FC, Luviquat® HM, Luviquat® MS, Luviset Clear®, Luviquat Supreme@, Luviquat® Care), copolymers of N-vinylpyrrolidone/dimethylaminoethyl methacrylate, quaternized with diethyl sulfate (Luviquat® PQ 11), copolymers of N-vinylcaprolactam/N-vinylpyrrolidone/N-vinylimidazolium salts (Luviquat® Hold); cationic cellulose derivatives (polyquaternium-4 and -10), acrylamido copolymers (polyquaternium-7) and chitosan. Suitable cationic (quaternized) polymers are also Merquat® (polymer based on dimethyldiallylammonium chloride), Gafquat® (quaternary polymers which are formed by reacting polyvinylpyrrolidone with quaternary ammonium compounds), polymer JR (hydroxyethylcellulose with cationic groups) and plant-based cationic polymers, e.g. guar polymers, such as the Jaguar@ grades from Rhodia. Also suitable are cationic polyurethanes, e.g. those described in WO 2006/069742.

Very particularly suitable polymers are neutral polymers, such as polyvinylpyrrolidones, copolymers of N-vinylpyrrolidone and vinyl acetate and/or vinylpropionate, polysiloxanes, polyvinylcaprolactam and other copolymers with N-vinylpyrrolidone, polyethyleneimines and salts thereof, polyvinylamines and salts thereof, cellulose derivatives, polyaspartic acid salts and derivatives. These include, for example, Luviflex® Swing (partially saponified copolymer of polyvinyl acetate and polyethylene glycol, BASF).

Suitable polymers are also nonionic, water-soluble or water-dispersible polymers or oligomers, such as polyvinylcaprolactam, e.g. Luviskol® Plus (BASF), or polyvinylpyrrolidone and copolymers thereof, in particular with vinyl esters, such as vinyl acetate, e.g. Luviskol® VA 37 (BASF); polyamides, e.g. based on itaconic acid and aliphatic diamines, as are described, for example, in DE-A-43 33 238.

Suitable polymers are also amphoteric or zwitterionic polymers, such as the octylacrylamide/methyl methacrylate/tert-butylaminoethyl methacrylate/2-hydroxypropyl methacrylate copolymers obtainable under the names Amphomer® (National Starch), and zwitterionic polymers, as are disclosed, for example, in the German patent applications DE 39 29 973, DE 21 50 557, DE 28 17 369 and DE 37 08 451. Acrylamidopropyltrimethylammonium chloride/acrylic acid or methacrylic acid copolymers and alkali metal and ammonium salts thereof are preferred zwitterionic polymers. Suitable zwitterionic polymers are also methacroylethylbetaine/methacrylate copolymers which are commercially available under the name Amersette® (AMERCHOL), and copolymers of hydroxyethyl methacrylate, methyl methacrylate, N,N-dimethylaminoethyl methacrylate and acrylic acid (Jordapon®).

Suitable polymers are also nonionic, siloxane-containing, water-soluble or -dispersible polymers, e.g. polyether siloxanes, such as Tegopren® (Goldschmidt) or Belsil® (Wacker).

The formulation base of pharmaceutical compositions according to the invention preferably comprises pharmaceutically acceptable auxiliaries. The auxiliaries which are known for use in the field of pharmacy, food technology and related fields are pharmaceutically acceptable, in particular those listed in relevant pharmacopoeia (e.g. DAB Ph. Eur. BP NF), and other auxiliaries whose properties do not preclude a physiological application.

Suitable auxiliaries may be: glidants, wetting agents, emulsifying and suspending agents, preservatives, antioxidants, antiirritants, chelating agents, emulsion stabilizers, film formers, gelling agents, odor masking agents, resins, hydrocolloids, solvents, solubility promoters, neutralizing agents, permeation accelerators, pigments, quaternary ammonium compounds, refatting and superfatting agents, ointment, cream or oil base substances, silicone derivatives, stabilizers, sterilizing agents, propellants, drying agents, opacifiers, thickeners, waxes, softeners, white oils. One embodiment in this regard is based on expert knowledge in the art, as is presented, for example, in Fiedler, H. P. Lexikon der Hilfsstoffe für Pharmazie, Kosmetik und angrenzende Gebiete [Lexicon of auxiliaries for pharmacy, cosmetics and related fields], 4th edition, Aulendorf: ECV-Editio-Kantor-Verlag, 1996.

To produce the dermatological compositions according to the invention, the active ingredients can be mixed or diluted with a suitable auxiliary (excipient). Excipients can be solid, semisolid or liquid materials which can serve as vehicles, carriers or medium for the active ingredient. The admixing of further auxiliaries takes place, if desired, in the manner known to the person skilled in the art. Furthermore, the polymers A) are suitable as auxiliaries in pharmacy, preferably as or in (a) coating(s) or binder(s) for solid drug forms. They can also be used in creams and as tablet coatings and tablet binders.

According to a preferred embodiment, the compositions according to the invention are a skin-cleansing composition.

Preferred skin-cleansing compositions are soaps of liquid to gel-like consistency, such as transparent soaps, luxury soaps, deodorant soaps, cream soaps, baby soaps, skin-protection soaps, abrasive soaps and syndets, pasty soaps, soft soaps and washing pastes, liquid washing, showering and bathing preparations, such as washing lotions, shower baths and gels, foam baths, oil baths and scrub preparations, shaving foams, lotions and creams.

According to a further preferred embodiment, the compositions according to the invention are cosmetic compositions for the care and protection of the skin, nail care compositions or preparations for decorative cosmetics.

Suitable skin cosmetic compositions are, for example, face tonics, face masks, deodorants and other cosmetic lotions. Compositions for use in decorative cosmetics comprise, for example, concealing sticks, stage make-up, mascara and eyeshadows, lipsticks, kohl pencils, eyeliners, blushers, powder and eyebrow pencils.

Furthermore, the copolymers according to the invention can be used in nose strips for pore cleansing, in antiacne compositions, repellents, shaving compositions, hair removal compositions, intimate care compositions, footcare compositions, and in babycare.

The skincare compositions according to the invention are, in particular, W/O or O/W skin creams, day and night creams, eye creams, face creams, antiwrinkle creams, moisturizing creams, bleaching creams, vitamin creams, skin lotions, care lotions and moisturizing lotions.

Skin cosmetic and dermatological compositions based on the copolymers described above exhibit advantageous effects. The polymers can, inter alia, contribute to the moisturization and conditioning of the skin and to the improvement in the skin feel. By adding the polymers according to the invention, in certain formulations it is also possible to achieve an improvement in skin compatibility.

Skin cosmetic and dermatological compositions preferably comprise at least one polymer A) comprising at least one panthenol ester in copolymerized form, in an amount of from about 0.001 to 30% by weight, preferably 0.01 to 20% by weight, very particularly preferably 0.1 to 12% by weight, based on the total weight of the composition.

Depending on the field of use, the compositions according to the invention can be applied in a form suitable for skincare, such as, for example, as cream, foam, gel, stick, mousse, milk, spray (pump spray or propellant-containing spray) or lotion.

Besides the polymers A) and suitable carriers, the skin cosmetic preparations can also comprise further active ingredients and auxiliaries customary in skin cosmetics, as described above. These include, preferably, emulsifiers, preservatives, perfume oils, cosmetic active ingredients, such as phytantriol, vitamin A, E and C, retinol, bisabolol, panthenol, photoprotective agents, bleaches, colorants, tinting agents, tanning agents, collagen, protein hydrolysates, stabilizers, pH regulators, dyes, salts, thickeners, gel formers, consistency regulators, silicones, humectants, refatting agents and further customary additives.

Preferred oil and fat components of these skin cosmetic and dermatological compositions are the abovementioned mineral and synthetic oils, such as, for example, paraffins, silicone oils and aliphatic hydrocarbons with more than 8 carbon atoms, animal and vegetable oils, such as, for example, sunflower oil, coconut oil, avocado oil, olive oil, lanolin, or waxes, fatty acids, fatty acid esters, such as, for example, triglycerides of C₆-C₃₀-fatty acids, wax esters, such as, for example, jojoba oil, fatty alcohols, vaseline, hydrogenated lanolin and acetylated lanolin, and mixtures thereof.

The polymers A) according to the invention, comprising at least one panthenol ester in copolymerized form, can also be mixed with conventional polymers if specific properties are to be established.

To establish certain properties, such as, for example, improving the feel to the touch, the spreading behavior, the water resistance and/or the binding of active ingredients and auxiliaries, such as pigments, the skin cosmetic and dermatological preparations can additionally also comprise conditioning substances based on silicone compounds. Suitable silicone compounds are, for example, polyalkylsiloxanes, polyarylsiloxanes, polyarylalkylsiloxanes, polyether siloxanes or silicone resins.

The cosmetic or dermatological preparations are produced by customary methods known to the person skilled in the art.

Preferably, the cosmetic and dermatological compositions are in the form of emulsions, in particular water-in-oil (W/O) or oil-in-water (O/W) emulsions. However, it is also possible to choose other types of formulation, for example hydrodispersions, gels, oils, oleogels, multiple emulsions, for example in the form of W/O/W or O/W/O emulsions, anhydrous ointments or ointment bases, etc.

Emulsions are produced by known methods. Besides at least one ampholytic copolymer, the emulsions usually comprise customary constituents, such as fatty alcohols, fatty acid esters and, in particular, fatty acid triglycerides, fatty acids, lanolin and derivatives thereof, natural or synthetic oils or waxes and emulsifiers in the presence of water. The selection of additives specific to the type of emulsion and the production of suitable emulsions is described, for example, in Schrader, Grundlagen und Rezepturen der Kosmetika [Fundamentals and formulations of cosmetics], Huthig Buch Verlag, Heidelberg, 2nd edition, 1989, third part, to which reference is hereby expressly made.

A suitable emulsion, e.g. for a skin cream etc., generally comprises an aqueous phase which has been emulsified using a suitable emulsifier system in an oil or fat phase. A polymer A) according to the invention can be used to provide the aqueous phase or the oil phase.

Preferred fatty components which may be present in the fat phase of the emulsions are: hydrocarbon oils, such as paraffin oil, purcellin oil, perhydrosqualene and solutions of microcrystalline waxes in these oils; animal and vegetable oils, such as sweet almond oil, avocado oil, calophylum oil, lanolin and derivatives thereof, castor oil, sesame oil, olive oil, jojoba oil, karite oil, hoplostethus oil; mineral oils whose distillation start under atmospheric pressure is at about 250°C and whose distillation end-point is at 410°C, such as, for example, vaseline oil; esters of saturated or unsaturated fatty acids, such as alkyl myristate, e.g. isopropyl, butyl or cetyl myristate, hexadecyl stearate, ethyl or isopropyl palmitate, octanoic or decanoic acid triglycerides and cetyl ricinoleate.

The fat phase can also comprise silicone oils soluble in other oils, such as dimethylpolysiloxane, methylphenylpolysiloxane and the silicone glycol copolymer, fatty acids and fatty alcohols.

It is also possible to use waxes, such as, for example, carnauba wax, candillila wax, beeswax, microcrystalline wax, ozokerite wax and Ca, Mg and Al oleates, myristates, linoleates and stearates.

Furthermore, an emulsion according to the invention can be in the form of a O/W emulsion. Such an emulsion usually comprises an oil phase, emulsifiers which stabilize the oil phase in the water phase, and an aqueous phase, which is usually present in thickened form. Suitable emulsifiers are preferably O/W emulsifiers, such as poly-glycerol esters, sorbitan esters or partially esterified glycerides.

According to a further preferred embodiment, the compositions according to the invention are a shower gel, a shampoo formulation or a bath preparation.

Such formulations comprise at least one polymer A) according to the invention and usually anionic surfactants as base surfactants and amphoteric and/or nonionic surfactants as cosurfactants. Further suitable active ingredients and/or auxiliaries are generally selected from lipids, perfume oils, dyes, organic acids, preservatives and antioxidants, and thickeners/gel formers, skin conditioners and humectants.

These formulations comprise preferably 2 to 50% by weight, preferably 5 to 40% by weight, particularly preferably 8 to 30% by weight, of surfactants, based on the total weight of the formulation.

All anionic, neutral, amphoteric or cationic surfactants usually used in body-cleansing compositions can be used in the washing, showering and bath preparations.

Suitable anionic surfactants are, for example, alkyl sulfates, alkyl ether sulfates, alkylsulfonates, alkylarylsulfonates, alkyl succinates, alkyl sulfosuccinates, N-alkoyl sarcosinates, acyl taurates, acyl isethionates, alkyl phosphates, alkyl ether phosphates, alkyl ether carboxylates, alpha-olefinsulfonates, in particular the alkali metal and alkaline earth metal salts, e.g. sodium, potassium, magnesium, calcium, and ammonium and triethanolamine salts. The alkyl ether sulfates, alkyl ether phosphates and alkyl ether carboxylates can have between 1 and 10 ethylene oxide or propylene oxide units, preferably 1 to 3 ethylene oxide units, in the molecule.

These include, for example, sodium lauryl sulfate, ammonium lauryl sulfate, sodium lauryl ether sulfate, ammonium lauryl ether sulfate, sodium lauryl sarcosinate, sodium oleyl succinate, ammonium lauryl sulfosuccinate, sodium dodecylbenzenesulfonate, triethanolamine dodecylbenzenesulfonate.

Suitable amphoteric surfactants are, for example, alkylbetaines, alkylamidopropyl-betaines, alkylsulfobetaines, alkyl glycinates, alkyl carboxyglycinates, alkyl amphoacetates or amphopropionates, alkyl amphodiacetates or amphodipropionates.

For example, cocodimethylsulfopropylbetaine, laurylbetaine, cocamidopropylbetaine or sodium cocamphopropionate can be used.

Suitable nonionic surfactants are, for example, the reaction products of aliphatic alcohols or alkylphenols having 6 to 20 carbon atoms in the alkyl chain, which may be linear or branched, with ethylene oxide and/propylene oxide. The amount of alkylene oxide is about 6 to 60 moles per mole of alcohol. Also suitable are alkylamine oxides, mono- or dialkylalkanolamides, fatty acid esters of polyethylene glycols, ethoxylated fatty acid amides, alkyl polyglycosides or sorbitan ether esters.

Furthermore, the washing, showering and bath preparations can comprise customary cationic surfactants, such as, for example, quaternary ammonium compounds, for example cetyltrimethylammonium chloride.

In addition, the shower gel/shampoo formulations can comprise thickeners, such as, for example, sodium chloride, PEG-55, propylene glycol oleate, PEG-120 methylglucose dioleate and others, and preservatives, further active ingredients and auxiliaries and water.

According to a particularly preferred embodiment, the compositions according to the invention are a hair treatment composition.

Hair treatment compositions according to the invention preferably comprise at least one polymer A) in an amount in the range from about 0.1 to 30% by weight, preferably 0.5 to 20% by weight, based on the total weight of the composition.

The hair treatment compositions are preferably in the form of a hair spray, setting foam, hair mousse, hair gel, shampoo, hair foam, end fluid, neutralizer for permanent waving, hair colorant and bleach or hot-oil treatment. Depending on the field of use, the hair cosmetic preparations can be applied as (aerosol) spray, (aerosol) foam, gel, gel spray, cream, lotion or wax. Hair sprays here comprise both aerosol sprays and pump sprays without propellant gas. Hair foams comprise both aerosol foams and pump foams without propellant gas. Hair sprays and hair foams comprise preferably predominantly or exclusively water-soluble or water-dispersible components. If the compounds used in the hair sprays and hair foams according to the invention are water-dispersible, they can be used in the form of aqueous microdispersions with particle diameters of usually 1 to 350 nm, preferably 1 to 250 nm. The solids contents of these preparations are here usually in a range from about 0.5 to 20% by weight. These microdispersions generally require no emulsifiers or surfactants for their stabilization.

The hair cosmetic formulations according to the invention comprise, in a preferred embodiment,
a) 0.05 to 20% by weight of at least one polymer A) according to the invention, comprising at least one panthenol ester in copolymerized form, as defined above,
b) 20 to 99.95% by weight of water and/or alcohol,
c) 0 to 50% by weight of at least one propellant gas,
d) 0 to 5% by weight of at least one emulsifier,
e) 0 to 3% by weight of at least one thickener, and
f) up to 25% by weight of further constituents.

Alcohol is to be understood as meaning all alcohols customary in cosmetics, e.g. ethanol, isopropanol, N-propanol.

Further constituents are to be understood as meaning the additives customary in cosmetics, for example propellants, antifoams, interface-active compounds, i.e. surfactants, emulsifiers, foam formers and solubilizers. The interface-active compounds used may be anionic, cationic, amphoteric or neutral. Further customary constituents may also be, for example, preservatives, perfume oils, opacifiers, active ingredients, UV filters, care substances, such as panthenol, collagen, vitamins, protein hydrolysates, alpha- and beta-hydroxycarboxylic acids, protein hydrolysates, stabilizers, pH regulators, dyes, viscosity regulators, gel formers, dyes, salts, humectants, refatting agents, complexing agents and further customary additives.

These also include all styling and conditioner polymers known in cosmetics which can be used in combination with the polymers according to the invention if very specific properties are to be established.

To establish certain properties, the preparations can additionally also comprise conditioning substances based on silicone compounds. Suitable silicone compounds are, for example, polyalkylsiloxanes, polyarylsiloxanes, polyarylalkylsiloxanes, polyether siloxanes, silicone resins or dimethicone copolyols (CTFA) and amino-functional silicone compounds, such as amodimethicones (CTFA).

The ampholytic copolymers and polyelectrolyte complexes according to the invention are particularly suitable as setting agents in hairstyling preparations, in particular hair sprays (aerosol sprays and pump sprays without propellant gas) and hair foams (aerosol foams and pump foams without propellant gas).

In a preferred embodiment, spray preparations comprise
a) 0.1 to 10% by weight of at least one polymer A), as defined above,
b) 20 to 99.9% by weight of water and/or alcohol,
c) 0 to 70% by weight of at least one propellant,
d) 0 to 20% by weight of further constituents.

Propellants are the propellants used customarily for hair sprays and aerosol foams. Preference is given to mixtures of propane/butane, pentane, dimethyl ether, 1,1-difluoroethane (HFC-152 a), carbon dioxide, nitrogen or compressed air.

A formulation preferred according to the invention for aerosol hair foams comprises
a) 0.1 to 10% by weight of at least one polymer A) according to the invention, as defined above,
b) 55 to 99.8% by weight of water and/or alcohol,
c) 5 to 20% by weight of a propellant,
d) 0.1 to 5% by weight of an emulsifier,
e) 0 to 10% by weight of further constituents.

Emulsifiers which can be used are all emulsifiers customarily used in hair foams. Suitable emulsifiers may be nonionic, cationic or anionic or amphoteric.

Examples of nonionic emulsifiers (INCI nomenclature) are laureths, e.g. laureth-4; cetheths, e.g. cetheth-1, polyethylene glycol cetyl ether; cetheareths, e.g. cetheareth-25, polyglycol fatty acid glycerides, hydroxylated lecithin, lactyl esters of fatty acids, alkyl polyglycosides.

Examples of cationic emulsifiers are cetyldimethyl-2-hydroxyethylammonium dihydrogenphosphate, cetyltrimonium chloride, cetyltrimonium bromide, cocotrimonium methylsulfate, quaternium-1 to x (INCI).

Anionic emulsifiers can be selected, for example, from the group of alkyl sulfates, alkyl ether sulfates, alkylsulfonates, alkylarylsulfonates, alkyl succinates, alkyl sulfosuccinates, N-alkoyl sarcosinates, acyl taurates, acyl isethionates, alkyl phosphates, alkyl ether phosphates, alkyl ether carboxylates, alpha-olefinsulfonates, in particular the alkali metal and alkaline earth metal salts, e.g. sodium, potassium, magnesium, calcium, and ammonium and triethanolamine salts. The alkyl ether sulfates, alkyl ether phosphates and alkyl ether carboxylates can have between 1 and 10 ethylene oxide or propylene oxide units, preferably 1 to 3 ethylene oxide units, in the molecule.

A preparation suitable according to the invention for styling gels can, for example, have the following composition:
a) 0.1 to 10% by weight of at least one polymer A) according to the invention, as defined above,
b) 80 to 99.85% by weight of water and/or alcohol,
c) 0 to 3% by weight, preferably 0.05 to 2% by weight, of a gel former,
d) 0 to 20% by weight of further constituents.

Gel formers which can be used are all gel formers customary in cosmetics. These include slightly crosslinked polyacrylic acid, for example carbomer (INCI), cellulose derivatives, e.g. hydroxypropylcellulose, hydroxyethylcellulose, cationically modified celluloses, polysaccharides, e.g. xanthan gum, caprylic/capric triglyceride, sodium acrylate copolymers, polyquaternium-32 (and) paraffinum liquidum (INCI), sodium acrylate copolymers (and) paraffinum liquidum (and) PPG-1 trideceth-6, acrylamidopropyltrimonium chloride/acrylamide copolymers, steareth-10 allyl ether acrylate copolymers, polyquaternium-37 (and) paraffinum liquidum (and) PPG-1 trideceth-6, polyquaternium 37 (and) propylene glycol dicaprate dicaprylate (and) PPG-1 trideceth-6, polyquaternium-7, polyquaternium-44.

The polymers A) according to the invention can be used in cosmetic preparations as conditioners.

The polymers A) according to the invention, as defined above, can preferably be used in shampoo formulations as setting agents and/or conditioners. Preferred shampoo formulations comprise
a) 0.05 to 10% by weight of at least one polymer A) as defined above,
b) 25 to 94.95% by weight of water,
c) 5 to 50% by weight of surfactant,
c) 0 to 5% by weight of a further conditioner,
d) 0 to 10% by weight of further cosmetic constituents.

In the shampoo formulations, it is possible to use all anionic, neutral, amphoteric or cationic surfactants customarily used in shampoos.

Suitable anionic surfactants are, for example, alkyl sulfates, alkyl ether sulfates, alkylsulfonates, alkylarylsulfonates, alkyl succinates, alkyl sulfosuccinates, N-alkoyl sarcosinates, acyl taurates, acyl isethionates, alkyl phosphates, alkyl ether phosphates, alkyl ether carboxylates, alpha-olefinsulfonates, in particular the alkali metal and alkaline earth metal salts, e.g. sodium, potassium, magnesium, calcium, and ammonium and triethanolamine salts. The alkyl ether sulfates, alkyl ether phosphates and alkyl ether carboxylates can have between 1 and 10 ethylene oxide or propylene oxide units, preferably 1 to 3 ethylene oxide units, in the molecule.

Of suitability are, for example, sodium lauryl sulfate, ammonium lauryl sulfate, sodium lauryl ether sulfate, ammonium lauryl ether sulfate, sodium lauroyl sarcosinate, sodium oleyl succinate, ammonium lauryl sulfosuccinate, sodium dodecylbenzenesulfonate, triethanolamine dodecylbenzenesulfonate.

Suitable amphoteric surfactants are, for example, alkylbetaines, alkylamidopropylbetaines, alkylsulfobetaines, alkyl glycinates, alkyl carboxyglycinates, alkyl amphoacetates or amphopropionates, alkyl amphodiacetates or amphodipropionates.

For example, cocodimethylsulfopropylbetaine, laurylbetaine, cocamidopropylbetaine or sodium cocamphopropionate can be used.

Suitable nonionic surfactants are, for example, the reaction products of aliphatic alcohols or alkylphenols having 6 to 20 carbon atoms in the alkyl chain, which may be linear or branched, with ethylene oxide and/or propylene oxide. The amount of alkylene oxide is about 6 to 60 moles per mole of alcohol. Also suitable are alkylamine oxides, mono- or dialkylalkanolamides, fatty acid esters of polyethylene glycols, alkyl polyglycosides or sorbitan ether esters.

Furthermore, the shampoo formulations can comprise customary cationic surfactants, such as, for example, quaternary ammonium compounds, for example cetyltrimethylammonium chloride.

### Pharmaceutical composition

A further aspect of the invention is a pharmaceutical composition, comprising
A) at least one polymer P) comprising polymerized units of
   α) at least one ethylenically unsaturated polysaccharide as defined above,
   β) optionally at least one ethylenically unsaturated monomer different from component α),
B) optionally at least one pharmaceutically acceptable active ingredient, and
C) optionally at least one pharmaceutically acceptable excipient.

Preferably, the pharmaceutical composition comprises the component A) in a fraction of from about 0.001 to 50% by weight, particularly preferably 0.01 to 30% by weight, in particular 0.1 to 20% by weight, based on the total weight of the composition.

The pharmaceutical composition of the invention is suitable for administering in principle any type of active pharmaceutical ingredient B). These include benzodiazepines, antihypertensives, vitamins, cytostatics, in particular taxol, anesthetics, neuroleptics, antidepressants, antibiotics, antimycotics, fungicides, chemotherapeutics, urologics, thrombocyte aggregation inhibitors, sulfonamides, spasmolytics, hormones, immunoglobulins, sera, thyroid therapeutic agents, psychopharmacological agents, antiparkinsonians and other antihyperkinetic agents, ophthalmics, neuropathy preparations, calcium metabolism regulators, muscle relaxants, narcotics, antilipemics, hepatic therapeutic agents, coronary agents, cardiacs, immunotherapeutics, regulatory peptides and their inhibitors, hypnotics, sedatives, gynecological agents, antigouts, fibrinolytic agents, enzyme preparations and transport proteins, enzyme inhibitors, emetics, circulation-promoting agents, diuretics, diagnostics, corticoids, cholinergics, bile duct therapeutics, antiasthmatics, broncholytics, beta-receptor blockers, calcium antagonists, ACE inhibitors, antiarteriosclerotics, antiinflammatories, anticoagulants, antihypotensives, antihypoglycemics, antihypertonics, antifibrinolytics, antiepileptics, antiemetics, antidotes, antidiabetics, antiarrhythmics, antianemics, antiallergics, anthelmintics, analgesics, analeptics, aldosterone antagonists and slimming agents.

Examples of suitable active ingredients B) are: acarbose, non-steroidal antirheumatics, cardiac glycosides, acetylsalicylic acid, virustatics, aclarubicin, acyclovir, cisplatin, actinomycin, alpha- and beta-sympathomimetics, allopurinol, alosetron, alprostadil, prostaglandins, amantadine, ambroxol, amlodipine, methotrexate, 5-aminosalicylic acid, amitriptyline, amlodipine, amoxicillin, anastrozole, atenolol, atorvastatin, azathioprine, balsalazide, beclomethasone, betahistine, bezafibrate, bicalutamide, diazepam and diazepam derivatives, budesonide, bufexamac, buprenorphine, methadone, calcium salts, potassium salts, magnesium salts, candesartan, carbamazepine, captopril, cefalosporins, celetoxib, cetirizine, chenodeoxycholic acid, ursodeoxycholic acid, theophylline and theophylline derivatives, trypsins, cimetidine, clarithromycin, clavulanic acid, clindamycin, clobutinol, clonidine, cotrimoxazole, codeine, caffeine, vitamin D and derivatives of vitamin D, colestyramine, cromoglicic acid, coumarin and coumarin derivatives, cysteine, cytarabine, cyclophosphamide, ciclosporin, cyproterone, cytarabine, dapiprazole, desogestrel, desonide, dihydralazine, diltiazem, ergot alkaloids, dimenhydrinate, dimethyl sulfoxide, dimethicone, dipyridamole, domperidone and domperidone derivatives, donepzil, dopamine, doxazosin, doxorubicin, doxylamine, dapiprazole, benzodiazepines, diclofenac, glycoside antibiotics, desipramine, econazole, ACE inhibitors, enalapril, ephedrine, epinephrine, epoetin and epoetin derivatives, morphinans, calcium antagonists, irinotecan, modafinil, orlistat, peptide antibiotics, phenytoin, riluzoles, risedronate, sildenafil, topiramate, macrolide antibiotics, esomeprazole, estrogen and estrogen derivatives, progestogen and progestogen derivatives, testosterone and testosterone derivatives, androgen and androgen derivatives, ethenzamide, etofenamate, etofibrate, fenofibrate, etofylline, etoposide, famciclovir, famotidine, felodipine, fenofibrate, fentanyl, fenticonazole, gyrase inhibitor, fluconazole, fludarabine, flunarizine, fluorouracil, fluoxetine, flurbiprofen, ibuprofen, flutamide, fluvastatin, follitropin, formoterol, fosfomicin, furosemide, fusidic acid, galantamine, gallopamil, ganciclovir, gemfibrozil, gentamicin, ginkgo, St John's wort, glibenclamide, urea derivatives as oral antidiabetics, glucagon, glucosamine and glucosamine derivatives, glutathione, glycerol and glycerol derivatives, hypothalamus hormones, goserelin, guanethidine, halofantrine, haloperidol, heparin and heparin derivatives, hyaluronic acid, hydralazine, hydrochlorothiazide and hydrochlorothiazide derivatives, salicylates, hydroxyzine, idarubicin, ifosfamide, imipramine, indometacin, indoramine, insulin, interferons, iodine and iodine derivatives, isoconazole, isoprenaline, glucitol and glucitol derivatives, itraconazole, ketoconazole, ketoprofen, ketotifen, lacidipine, lansoprazole, levodopa, levomethadone, thyroid hormones, lipoic acid and lipoic acid derivatives, lisinopril, lisuride, lofepramine, lomustine, loperamide, loratadine, maprotiline, mebendazole, mebeverine, meclozine, mefenamic acid, mefloquine, meloxicam, mepindolol, meprobamate, meropenem, mesalazine, mesuximide, metamizole, metformin, methotrexate, methylphenidate, methylprednisolone, metixen, metoclopramide, metoprolol, metronidazole, mianserin, miconazole, minocycline, minoxidil, misoprostol, mitomycin, mizolastine, moexipril, morphine and morphine derivatives, evening primrose, nalbuphine, naloxone, tilidine, naproxen, narcotine, natamycin, neostigmine, nicergoline, nicethamide, nifedipine, niflumic acid, nimodipine, nimorazole, nimustine, nisoldipine, adrenaline, and adrenaline derivatives, norfloxacin, novaminsulfone, noscapine, nystatin, ofloxacin, olanzapine, olsalazine, omeprazole, omoconazole, ondansetron, orlistat, oseltamivir, oxaceprol, oxacillin, oxiconazole, oxymetazoline, pantoprazole, paracetamol, paroxetine, penciclovir, oral penicillins, pentazocine, pentifylline, pentoxifylline, perphenazine, pethidine, plant extracts, phenazone, pheniramine, barbituric acid derivatives, phenylbutazone, phenytoin, pimozide, pindolol, piperazine, piracetam, pirenzepine, piribedil, piroxicam, pramipexol, pravastatin, prazosin, procaine, promazine, propiverine, propranolol, propyphenazone, prostaglandins, protionamide, proxyphylline, quetiapine, quinapril, quinaprilate, ramipril, ranitidine, reproterol, reserpine, ribavirin, rifampicin, risperidone, ritonavir, ropinirol, rosiglitazone, roxatidine, roxithromycin, ruscogenin, rutoside and rutoside derivatives, sabadilla, salbutamol, salmeterol, scopolamine, selegiline, sertaconazole, sertindole, sertraline, silicates, simvastatin, sitosterol, sotalol, spaglumic acid, sparfloxacin, spectinomycin, spiramycin, spirapril, spironolactone, stavudine, streptomycin, sucralfate, sufentanil, sulbactam, sulfonamides, sulfasalazine, sulpiride, sultamicillin, sultiam, sumatriptan, suxamethonium chloride, tacrine, tacrolimus, taliolol, tamoxifen, taurolidine, tazarotene, tegaserod, temazepam, teniposide, tenoxicam, terazosin, terbinafine, terbutaline, terfenadine, terlipressin, tertatolol, tetracyclines, tetryzoline, theobromine, theophylline, butizine, thiamazole, phenothiazines, thiotepa, tiagabine, tiapride, propionic acid derivatives, ticlopidine, timolol, tinidazole, tioconazole, tioguanine, tioxolone, tiropramide, tizanidine, tolazoline, tolbutamide, tolcapone, tolnaftate, tolperisone, topotecan, torasemide, antiestrogens, tramadol, tramazoline, trandolapril, tranylcypromine, trapidil, trazodone, triamcinolone and triamcinolone derivatives, triamterene, trifluperidol, trifluridine, trimethoprim, trimipramine, tripelennamine, triprolidine, trifosfamide, tromantadine, trometamol, tropalpin, troxerutin, tulobuterol, tyramine, tyrothricin, urapidil, ursodeoxycholic acid, chenodeoxycholic acid, valaciclovir, valdecoxib, valproic acid, vancomycin, vecuronium chloride, venlafaxine, verapamil, vidarabine, vigabatrine, viloxazine, vinblastine, vincamine, vincristine, vindesine, vinorelbine, vinpocetine, viquidil, warfarin, xantinol nicotinate, xipamide, zafirlukast, zalcitabine, zanamivir, zidovudine, zolmitriptan, zolpidem, zopiclone, zotepine and the like.

The active ingredients can, if desired, also be used in the form of their pharmaceutically acceptable salts or derivatives, and in the case of chiral active ingredients it is possible to employ both optically active isomers and racemates or mixtures of diastereoisomers. The compositions of the invention can, if desired, also comprise two or more active pharmaceutical ingredients.

The formulation base of pharmaceutical compositions of the invention preferably comprises pharmaceutically acceptable excipients C). Pharmaceutically acceptable excipients are those known to be usable in the area of pharmacy, food technology and adjacent sectors, in particular the excipients listed in relevant pharmacopeias (e.g. DAB, Ph. Eur., BP, USP, JP) and others, whose properties do not stand in the way of physiological use.

Suitable excipients C) may be: lubricants, wetting agents, emulsifying and suspending agents, antioxidants, anti-irritants, chelating agents, emulsion stabilizers, film formers, gel formers, odor-masking agents, resins, hydrocolloids, solvents, solubilizers, neutralizers, permeation promoters, pigments, colorants, stabilizers, disintegrants, dessicants, opacifiers, thickeners, waxes, plasticizers, flavors, sweeteners, excipients to reduce permeation etc. An arrangement concerning this is based on specialist knowledge as described for example in Fiedler, H. P. Lexikon der Hilfsstoffe for Pharmazie, Kosmetik und angrenzende Gebiete, 4th edition, Aulendorf: ECV-Editio-Cantor-Verlag, 1996.

### Microbiocidal composition

It was found surprisingly, that the polymers P) according to the invention exhibit high affinity to various surfaces, in particular inorganic surfaces, such as metals, e.g. stainless steel, glass, ceramic, mineral materials, and polymer materials and are suitable for modifying the surface properties of these materials. Thus, the polymers P) according to the invention are suitable to minimize the risk of microbial colonization of materials coated therewith or materials comprising those polymers P) in incorporated form.

Infections with microorganisms represent a major problem e.g. in connection with medical instruments and devices, implant materials, wound protection films and dressing materials. Such infections are triggered by the adhesion of surface-active microorganisms and the resulting biofilm development primarily on hydrophobic surfaces. The adhesion of the bacteria to surfaces is based on the one hand on nonspecific interactions such as electrostatic interactions, Van-der-Waals forces and acid-base interactions and, on the other hand, on specific interactions such as receptor/ligand bonds. The surface of pathogenic bacteria is covered with adhesins, i.e. proteins which aid adhesion to surfaces. The nature of the surface of the materials such as roughness and surface tension are decisive criteria for the colonization of surfaces. For this reason, it is important, through a modification of the surfaces, to minimize the number of adhering bacteria and thus the plaque formation and the infection of adjacent tissue.

In a preferred embodiment, the polymers P) according to the invention are used as antimicrobial coating. The coating according to the invention is in particular suitable for the coating of material surfaces in the medical-therapeutic application, for example for the coating of metallic implants, of wound protection films and dressing material or for the coating of medical instruments and devices, such as catheters. In the field of biotechnology, the coating according to the invention is suitable in particular for the construction of apparatuses (e.g. fermentors), for the coating of seals and for suppressing biofouling.

A further aspect of the invention is a microbiocidal composition, comprising
A) at least one polymer P) comprising polymerized units of
   α) at least one ethylenically unsaturated polysaccharide as defined above or obtainable by the process as define above,
   ) optionally at least one ethylenically unsaturated monomer different from component α).

The content of the polymer P) in the microbiocidal compositions of the invention can be varied over wide ranges. Preferably, the microbiocidal composition comprises the at least one polymer P) in an amount of from 0.01 to 100 wt.%, more preferably 0.1 to 99.9 wt.%, in particular 0.5 to 95 wt.%, based on the total weight of the composition. Especially, the microbiocidal composition comprises the at least one polymer P) in an amount of from 0.01 to 10 wt.%, more especially 0.05 to 5 wt.%, in particular 0.1 to 1 wt.%, based on the total weight of the composition.

In addition to at least one polymer P) (= component A), the microbiocidal compositions of the invention may comprise at least one further microbiocidal compound different from the compounds of component (A) (= component B).

Suitable further microbiocidal compounds (B) are selected from
- alcohols, including halogenated alcohols,
- isothiazolones,
- activated halogen compounds,
- formaldehyde release compounds,
- phenolic compounds,
- aldehydes,
- acids and esters,
- biphenyls,
- urea derivatives,
- O-acetals, O-formals,
- N-acetals, N-formals,
- benzamidines,
- phthalimides,
- pyridine derivatives,
- quaternary ammonium and phosphonium compounds,
- amines,
- amphoteric compounds,
- dithiocarbamates,
- compounds containing active oxygen such as peroxide,
- inorganic salts such as metal oxides, metal chlorides, metal sulfates, etc.,
- organic metal salts, such as Zn-pyrithion, Ag-lactate, etc.,
- mixtures thereof.

Examples of alcohol compounds which may serve as the microbiocidally effective component (B) are 2-bromo-2-nitropropane-1,3-diol and 2-(hydroxymethyl)-2-nitro-1,3-propanediol. Examples of isothiazolone compounds are 5-chloro-2-methyl-2H-isothiazol-3-one (CIT), 2-methyl-2H-isothiazol-3-one (MIT), 1,2-benzisothiazol-3(2H)-one, 2-n-octyl-2H-isothiazol-3-one, 4,5-dichloro-2-octyl-2H-isothiazol-3-one and 2-butyl-benzo-[d]isothiazol-3-one and mixtures thereof with one another, including a mixture of CIT with MIT or mixtures of CIT or MIT with any of 1,2-benzoisothiazol-3(2H)-one, 2-octyl-2H-isothiazol-3-one, 4,5-dichloro-2-octyl-2H-isothiazol-3-one and 2-butyl-benzo[d]isothiazol-3-one. Examples of other compounds are dibromodicyanobutane, [beta]-bromo-[beta]-nitrostyrene, 7a-ethyldihydro-1 H,3H,5H-oxazolo[3,4-c]oxazole, tetrahydro-1,3,4,6-tetrakis(hydroxymethyl)-imidazo[4,5-d]-imidazole-2,5(1H,3H)-dione, 1,3-dimethyl-5,5-dimethylhydantoin, diazolidinyl ureas and imidazolidinyl ureas, N'-(3,4-dichlorophenyl)-N,N-dimethyl urea, 3,3'-methylene-bis(5-methyl-oxazolidine), 2-sodiumsulfidopyridine-N-oxide and its metal salts, dibromonitritopropionamide, tetrakishydroxymethylphosphonium salts, orthophenylphenol and salts of ortho-phenylphenol, 1-(3-chloroallyl)-3,5,7-triaza-1-azodiadamantane salts, (5-chloro-2,4-dichlorophenoxy)phenol, 3,4,4'-trichlorocarbanilide (triclocarban), o-benzo-p-chlorophenol, p-hydroxybenzoates, 2-(thiocyanomethylthio) benzothiazole, 3,5-dimethyl-1,3,5-thiadiazinane-2-thione, 2,4-dichlorobenzyl alcohol, chlorothalonil, methylenebis(thiocyanate), peracetic acid, 4,4-dimethyl-oxazolidine, phenoxyethanol, phenoxypropanol, 2,6-dimethyl-m-dioxan-4-ol-acetate, glutaraldehyde, glyoxal, ortho-phthalaldehyde, 4-(2-nitrobutyl)-morpholine, triazines such as 1,3,5-tris-(2-hydroxyethyl)-1,3,5-hexahydrotriazine, quaternary ammonium compounds such as benzalkoniumchloride, polyhexamethylenebiguanide salts, poly(oxyethylene(dimethylimino)ethylene(dimethylimino)-ethylene dichloride, chlorhexidine gluconate, chloroisocyanurates, halogenated hydantoins such as 1-bromo-3-chloro-5,5-dimethylhydantoin and polamines such as polyvinylamine- and polyethylene imine derivatives. Further examples include IPBC, terbutryn, ziram, zineb, dichlofluanid, trichlofuanid, folpet, metal dihexa-2,4-dienoate, tebuconazole, 3-benzo(b)thien-2-yl-5,6-dihydro-1,4,2-oxathiazine, 4-oxide, pyrithiones, thiram, cybutryne, MBT, carbendazim, diuron, chlorotoluron, fluorometuron, thiabendazole, metazachlor, CuSCN, or dicopper oxide.

Preferred components (B) are 2-bromo-2-nitropropane-1,3-diol, 2-methyl-2H-isothiazol-3-one, 1,2-benzisothiazol-3(2H)-one, 2-n-octyl-2H-isothiazol-3-one, a mixture of 5-chloro-2-methyl-2H-isothiazol-3-one with 2-methyl-2H-isothiazol-3-one, dibromodicyanobutane, tetrahydro-1,3,4,6-tetrakis(hydroxymethyl)-imidazo[4,5-d]-imidazole-2,5(1H,3H)-dione, 3,3'-methylenebis(5-methyl-oxazolidine), 1,3-dimethyl-5,5-dimethylhydantoin, tetrakishydroxymethylphosphonium salts, ortho-phenylphenol and salts of ortho-phenylphenol, 1-(3-chloroallyl)-3,5,7-triaza-1-azodiadamantane salts, (5-chloro-2,4-dichlorophenoxy)phenol, 3,4,4'-trichlorocarbanilide (triclocarban), p-hydroxy-benzoates, 2-(thiocyanomethylthio) benzothiazole, 3,5-dimethyl-1,3,5-thiadiazinane-2-thione), iodo-2-propynylbutylcarbamate, 2-sodiumsulfidopyridine-N-oxide and its metal salts, 2,4-dichlorobenzyl alcohol, chlorothalonil, methylenebis(thiocyanate), phenoxyethanol, phenoxypropanol, triazines, such as 1,3,5-tris-(2-hydroxyethyl)-1,3,5-hexahydrotriazine, quaternary ammonium compounds such as benzalkoniumchloride, polyhexamethylene biguanide salts, poly(oxyethylene(dimethyimino)ethylene (dimethylimino)ethylene dichloride, chlorhexidine gluconate, chloroisocyanurates and polyvinylamines, especially the polyamines disclosed in WO-A-97/32477.

If the microbiocidal composition according to the invention comprises components (A) and (B), the amounts of the components (A) and (B) in the composition are preferably 1 to 99 wt.% of (A) and 99 to 1 wt.% of (B), more preferably 10 to 90 wt.% of (A) and 90 to 10 wt.% of (B), especially 20 to 80 wt.% of (A) and 80 to 20 wt.% of (B). Preferably, the microbiocidal composition comprises the sum of compounds (A) and (B) in an amount of from 0.01 to 100 wt.%, more preferably 0.1 to 99.9 wt.%, in particular 0.5 to 95 wt.%, based on the total weight of the composition. Especially, the microbiocidal composition comprises the sum of compounds (A) and (B) in an amount of from 0.01 to 10 wt.%, more especially 0.05 to 5 wt.%, in particular 0.1 to 1 wt.%, based on the total weight of the composition.

The microbiocidal composition according to the invention, comprising a component (A), optionally (B) and optionally further components can be made up into the usual formulations and preparations that are suitable for the desired purpose. The microbiocidal composition according to the invention can be provided and/or applied as a solid or as a liquid. This encompasses compositions in form of aerosols. The microbiocidal composition according to the invention can be formulated e.g. as powder, granulate, pellets, pills, agglomerates, solutions, emulsions, suspensions, dispersions, pastes, in combination with carrier materials, etc.

The microbiocidal compositions according to the invention can be formulated free from solvent or with a suitable solvent. Generally, the imidazolium compounds used according to the invention are soluble in most protic solvents, swellable in most aprotic polar solvents and insoluble in most nonpolar solvents. Suitable solvents for the microbiocidal compositions according to the invention are selected from among water, alcohols, such as methanol, ethanol, n-propanol, isopropanol, n-butanol, tert-butanol, diols and polyols, such as ethanediol and propanediol, amino alcohols, such as ethanolamine, diethanolamine and triethanolamine, ethers, e.g. tetrahydrofuran, diethyl ether, methyl tert-butyl ether and diethylene glycol monomethyl ether, ketones, such as acetone and methyl ethyl ketone, esters, e.g. ethyl acetate, formamide, dimethylformamide (DMF), dimethylacetamide, dimethyl sulfoxide (DMSO), acetonitrile, aromatic solvents, e.g. benzene, toluene, ethylbenzene or xylenes, halogenated solvents, e.g. dichloromethane, chloroform, carbon tetrachloride, dichloroethane or chlorobenzene, aliphatic solvents, e.g. pentane, hexane, heptane, octane, ligroin, petroleum ether, cyclohexane and decalin, and mixtures thereof.

The solvent is preferably selected from among water, water-miscible organic solvents and mixtures thereof. The solvent is particularly preferably selected from among water, methanol, ethanol, n-propanol, isopropanol, n-butanol, tert-butanol and mixtures thereof.

A multitude of different active substances and additives can be formulated in the microbiocidal compositions according to the invention.

The polymers A) employed according to the invention are in particular suitable to provide antimicrobial polymers and coating compositions, for example compositions for medical applications. The polymer compositions and coating compositions show an outstanding antimicrobial activity. Thus, in a further aspect, the invention provides an antimicrobial polymer composition or coating composition, wherein the polymer composition or the coating comprises an effective antimicrobial amount of at least one polymer A), as defined above.

Preferably, the polymer composition or coating composition comprises at least one polymer A) in an amount of from about 0.001 to about 15.0 wt.%, more preferably 0.01 to 10.0 wt.%, based on the total weight of the polymer composition or the coating composition.

A further aspect of the invention is a polymer composition or coating composition, comprising
A) at least one polymer P) as defined above,
B) optionally at least one further microbiocidal compound different from the compounds of component (A),
C) optionally at least one polymer and/or at least one polymerizable compound, and
D) optionally at least one additive.

With regard to suitable and preferred compounds of the components A) and B), reference is made to the aforementioned description of suitable and preferred embodiments of those components.

The employed polymers may be in any form, for example fibers, films or molded parts. They may be for example woven or nonwoven polymer fabrics.

Suitable polymers C) may be selected from:
1. Polymers of monoolefins and diolefins, for example polypropylene, polyisobutylene, polybut-1-ene, poly-4-methylpent-1-ene, polyisoprene or polybutadiene, as well as polymers of cycloolefins, for instance of cyclopentene or norbornene, polyethylene (which optionally can be crosslinked), for example high density polyethylene (HDPE), low density polyethylene (LDPE), linear low density polyethylene (LLDPE), branched low density polyethylene (BLDPE) and medium density polyethylene (MDPE).
   Polyolefins, i.e. the polymers of monoolefins exemplified in the preceding paragraph, preferably polyethylene and polypropylene, can be prepared by different, and especially by the following, methods:
   a) radical polymerization (normally under high pressure and at elevated temperature),
   b) catalytic polymerization using a catalyst that normally contains one or more than one metal of groups IVb, Vb, Vlb or VIII of the Periodic Table. These metals usually have one or more than one ligand, typically oxides, halides, alcoholates, esters, ethers, amines, alkyls, alkenyls and/or aryls that may be either p- or s-coordinated. These metal complexes may be in the free form or fixed on substrates, typically on activated magnesium chloride, titanium(III) chloride, alumina or silicon oxide. These catalysts may be soluble or insoluble in the polymerization medium. The catalysts can be used by themselves in the polymerization or further activators may be used, typically metal alkyls, metal hydrides, metal alkyl halides, metal alkyl oxides or metal alkyloxanes, said metals being elements of groups Ia, IIa and/or IIIa of the Periodic Table. The activators may be modified conveniently with further ester, ether, amine or silyl ether groups. These catalyst systems are usually termed Phillips, Standard Oil Indiana, Ziegler (-Natta), TNZ (DuPont), metallocene or single site catalysts (SSC).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of monoolefins and diolefins with each other or with other vinyl monomers, for example ethylene/propylene copolymers, linear low density polyethylene (LLDPE) and mixtures thereof with low density polyethylene (LDPE), propylene/but-1-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, propylene/butadiene copolymers, isobutylene/isoprene copolymers, ethylene/alkyl acrylate copolymers, ethylene/alkyl methacrylate copolymers, ethylene/vinyl acetate copolymers and their copolymers with carbon monoxide or ethylene/acrylic acid copolymers and their salts (ionomers) as well as terpolymers of ethylene with propylene and a diene such as hexadiene, dicyclopentadiene or ethylidenenorbornene; and mixtures of such copolymers with one another and with polymers mentioned in 1) above, for example polypropylene/ethylene-propylene copolymers, LDPE/ethylene-vinyl acetate copolymers (EVA), LDPE/ethylene-acrylic acid copolymers (EAA), LLDPE/EVA, LLDPE/EAA and alternating or random polyalkylene/carbon monoxide copolymers and mixtures thereof with other polymers, for example polyamides.
4. Hydrocarbon resins (for example C5-C9) including hydrogenated modifications thereof (e.g. tackifiers) and mixtures of polyalkylenes and starch.
5. Polystyrene, poly(p-methylstyrene), poly(a-methylstyrene).
6. Copolymers of styrene or [alpha-methylstyrene with dienes or acrylic derivatives, for example styrene/butadiene, styrene/unsaturated ester, styrene/acrylonitrile, styrene/alkyl methacrylate, styrene/butadiene/alkyl acrylate, styrene/butadiene/alkyl methacrylate, styrene/maleic anhydride, styrene/acrylonitrile/methyl acrylate; mixtures of high impact strength of styrene copolymers and another polymer, for example a polyacrylate, a diene polymer or an ethylene/propylene/diene terpolymer; and block copolymers of styrene such as styrene/butadiene/styrene, styrene/isoprene/styrene, styrene/ethylene/butylene/styrene or styrene/ethylene/propylene/ styrene.
7. Graft copolymers of styrene or [alpha-methylstyrene, for example styrene on polybutadiene, styrene on polybutadiene-styrene or polybutadiene-acrylonitrile copolymers; styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleimide on polybutadiene; styrene and maleimide on polybutadiene; styrene and alkyl acrylates or methacrylates on polybutadiene; styrene and acrylonitrile on ethylene/propylene/diene terpolymers; styrene and acrylonitrile on polyalkyl acrylates or polyalkyl methacrylates, styrene and acrylonitrile on acrylate/butadiene copolymers, as well as mixtures thereof with the copolymers listed under 6), for example the copolymer mixtures known as ABS, SAN, MBS, ASA or AES polymers.
8. Halogen-containing polymers such as polychloroprene, chlorinated rubbers, chlorinated or sulfochlorinated polyethylene, copolymers of ethylene and chlorinated ethylene, epichlorohydrin homo- and copolymers, especially polymers of halogen-containing vinyl compounds, for example polyvinyl chloride, polyvinylidene chloride, polyvinyl fluoride, polyvinylidene fluoride, as well as copolymers thereof such as vinyl chloride/vinylidene chloride, vinyl chloride/vinyl acetate or vinylidene chloride/vinyl acetate copolymers.
9. Polymers derived from α,β-unsaturated acids and derivatives thereof such as polyacrylates and polymethacrylates; polymethyl methacrylates, polyacrylamides and polyacrylonitriles, impact-modified with butyl acrylate.
10. Copolymers of the monomers mentioned under 9) with each other or with other unsaturated monomers, for example acrylonitrile/ butadiene copolymers, acrylonitrile/alkyl acrylate copolymers, acrylonitrile/alkoxyalkyl acrylate or acrylonitrile/vinyl halide copolymers or acrylonitrile/ alkyl methacrylate/butadiene terpolymers.
11. Polymers derived from unsaturated alcohols and amines or the acyl derivatives or acetals thereof, for example polyvinyl alcohol, polyvinyl acetate, polyvinyl stearate, polyvinyl benzoate, polyvinyl maleate, polyvinyl butyral, polyallyl phthalate or polyallyl melamine; as well as their copolymers with olefins mentioned in 1) above.
12. Homopolymers and copolymers of cyclic ethers such as polyalkylene glycols, polyethylene oxide, polypropylene oxide or copolymers thereof with bis-glycidyl ethers.
13. Polyacetals such as polyoxymethylene and those polyoxymethylenes which contain ethylene oxide as a comonomer; polyacetals modified with thermoplastic polyurethanes, acrylates or MBS.
14. Polyphenylene oxides and sulfides, and mixtures of polyphenylene oxides with styrene polymers or polyamides.
15. Polyurethanes derived from hydroxyl-terminated polyethers, polyesters or polybutadienes on the one hand and aliphatic or aromatic polyisocyanates on the other, as well as precursors thereof.
16. Polyamides and copolyamides derived from diamines and dicarboxylic acids and/or from aminocarboxylic acids or the corresponding lactams, for example polyamide 4, polyamide 6, polyamide 6/6, 6/10, 6/9, 6/12, 4/6, 12/12, polyamide 11, polyamide 12, aromatic polyamides starting from m-xylene diamine and adipic acid; polyamides prepared from hexamethylenediamine and isophthalic or/and terephthalic acid and with or without an elastomer as modifier, for example poly-2,4,4,-trimethylhexamethylene terephthalamide or poly-m-phenylene isophthalamide; and also block copolymers of the aforementioned polyamides with polyolefins, olefin copolymers, ionomers or chemically bonded or grafted elastomers; or with polyethers, e.g. with polyethylene glycol, polypropylene glycol or polytetramethylene glycol; as well as polyamides or copolyamides modified with EPDM or ABS; and polyamides condensed during processing (RIM polyamide systems).
17. Polyureas, polyimides, polyamide-imides and polybenzimidazoles.
18. Polyesters derived from dicarboxylic acids and diols and/or from hydroxycarboxylic acids or the corresponding lactones, for example polyethylene terephthalate, polytrimethylene terephthalate, polybutylene terephthalate, poly-1,4-dimethylolcyclohexane terephthalate and polyhydroxybenzoates, as well as block copolyether esters derived from hydroxyl-terminated polyethers; and also polyesters modified with polycarbonates or MBS. Polyesters and polyester copolymers as defined in U.S. Pat. No. 5,807,932 (column 2, line 53), incorporated herein by reference.
19. Polycarbonates and polyester carbonates.
20. Polysulfones, polyether sulfones and polyether ketones.
21. Crosslinked polymers derived from aldehydes on the one hand and phenols, ureas and melamines on the other hand, such as phenol/formaldehyde resins, urea/formaldehyde resins and melamine/formaldehyde resins.
22. Drying and non-drying alkyd resins.
23. Unsaturated polyester resins derived from copolyesters of saturated and unsaturated dicarboxylic acids with polyhydric alcohols and vinyl compounds as crosslinking agents, and also halogen-containing modifications thereof of low flammability.
24. Crosslinkable acrylic resins derived from substituted acrylates, for example epoxy acrylates, urethane acrylates or polyester acrylates.
25. Alkyd resins, polyester resins and acrylate resins crosslinked with melamine resins, urea resins, polyisocyanates or epoxy resins.
26. Crosslinked epoxy resins derived from polyepoxides, for example from bis-glycidyl ethers or from cycloaliphatic diepoxides.
27. Natural polymers such as cellulose, rubber, gelatin and chemically modified homologous derivatives thereof, for example cellulose acetates, cellulose propionates and cellulose butyrates, or the cellulose ethers, such as methyl cellulose; as well as rosins and their derivatives.
28. Blends of the aforementioned polymers (polyblends), for example PP/EPDM, Polyamide/-EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPO/HIPS, PPO/PA 6.6 and copolymers, PA/HDPE, PA/PP, PA/PPO.
29. Naturally occurring and synthetic organic materials which are pure monomeric compounds or mixtures of such compounds, for example mineral oils, animal and vegetable fats, oil and waxes, or oils, fats and waxes based on synthetic esters (e.g. phthalates, adipates, phosphates or trimellitates) and also mixtures of synthetic esters with mineral oils in any weight ratios, typically those used as spinning compositions, as well as aqueous emulsions of such materials.
30. Aqueous emulsions of natural or synthetic rubber, e.g. natural latex or latices of carboxylated styrene/butadiene copolymers.
31. Polysiloxanes such as the soft, hydrophilic polysiloxanes described, for example, in U.S. Pat. No. 4,259,467; and the hard polyorganosiloxanes described, for example, in U.S. Pat. No. 4,355,147.
32. Silicone elastomers, for example liquid silicone rubbers (LSR). Liquid Silicone Rubbers are available from Dow Chemical and are described for example in U.S. Pat. Nos. 6,569,536; 6,420,038; 6,297,291; 6,218,466; 6,130,272; 5,994,461; 5,989,719; 5,973,030; 5,908,888; 5,880,199; 5,877,256; 5,859,094; 5,789,084 and 5,661,210. The disclosures of these U.S. patents are incorporated by reference.
33. Polyketimines in combination with unsaturated acrylic polyacetoacetate resins or with unsaturated acrylic resins. The unsaturated acrylic resins include the urethane acrylates, polyether acrylates, vinyl or acryl copolymers with pendant unsaturated groups and the acrylated melamines. The polyketimines are prepared from polyamines and ketones in the presence of an acid catalyst.
34. Radiation curable compositions containing ethylenically unsaturated monomers or oligomers and a polyunsaturated aliphatic oligomer.
35. Epoxymelamine resins such as light-stable epoxy resins crosslinked by an epoxy functional coetherified high solids melamine resin such as LSE-4103 (Monsanto).

Included also are thermoplastic olefin (TPO), thermoplastic elastomers, polyetherimide, polymethylpentene, polyphenylene ether, polyphenylene sulfide, polysulfone or polytetrafluoroethylene (PTFE).

Some polymers of specific technical interest include:
Polysulfone (PSF)
Polyethersulfone (PES)
Polyphenylsulfone (PPS)
Polyvinylidene Fluoride (PVDF)
Polypropylene (PP)
Polyethylene (PE)
Cellulose, Cellulose acetates (CA), Cellulose nitrate
Polyamide (PA)
Polyacrylonitrile (PAN)
Polytetrafluoroethylene (PTFE)
Polycarbonate (PC)
Polymethylmethacrylate (PMMA).

In particular, the present polymers are those that are typically employed in medical applications, for example polyurethanes, polycarbonate, liquid silicone rubbers, polyethylene, polypropylene, polyethylene/polypropylene copolymers or polymer composites.

Polymer composites are for instance natural products composites, for example a natural product mixed with a thermoplastic polymer such as a polyolefin. Such composites are disclosed in published U.S. app. No. 20040235983, the disclosure of which is hereby incorporated by reference. Natural products are for instance wood flour, flax, hemp, jute, kenaf or rice husk. The thermoplastic polymer is for instance polyethylene or polypropylene.

A preferred polymer composition or coating composition according to the invention additionally contains, for example, one or more components D) selected from antioxidants, light stabilizers (such as UV absorbers and/or sterically hindered amines, phosphites, phosphonites), metal deactivators, nucleating agents, fillers, plasticisers, pigments, flameproofing agents, antistatic agents, lubricants, emulsifiers, rheology additives, catalysts, flow-control agents, optical brighteners, blowing agents and combinations thereof.

The employed components D), in particular the antioxidants, light stabilizers, and metal deactivators, preferably have a high migration fastness and temperature resistance.

Suitable antioxidants D) are selected from the following classes:
1. Alkylated monophenols, for example 2,6-di-tert-butyl-4-methylphenol, 2-tert-butyl-4,6-di-methylphenol, 2,6-di-tert-butyl-4-ethylphenol, etc.;
2. Alkylthiomethylphenols, for example 2,4-dioctylthiomethyl-6-tert-butylphenol, 2,4-dioctylthiomethyl-6-methylphenol, 2,4-dioctylthiomethyl-6-ethylphenol, 2,6-di-dodecylthiomethyl-4-nonylphenol, etc.;
3. Hydroquinones and alkylated hydroquinones, for example 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis(3,5-di-tert-butyl-4-hydroxyphenyl)adipate, etc.;
4. Tocopherols;
5. Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis(3,6-di-sec-amylphenol), 4,4'-bis(2,6-dimethyl-4-hydroxyphenyl)-disulfide, etc.;
6. Alkylidenebisphenols, for example 2,2'-methylenebis(6-tert-butyl-4-methyl-phenol), 2,2'-methylenebis(6-tert-butyl-4-ethylphenol), 2,2'-methylenebis[4-methyl-6-(α-methylcyclohexyl)-phenol, 1,1-bis-(3,5-dimethyl-2-hydroxyphenyl)butane, 2,2-bis(3,5-di-tert-butyl-4-hydroxyphenyl)propane, 2,2-bis(5-tert-butyl-4-hydroxy-2-methylphenyl)-4-n-dodecylmercaptobutane, 1,1,5,5-tetra-(5-tert-butyl-4-hydroxy-2-methylphenyl)pentane, etc.;
7. O-, N- and S-benzyl compounds, for example 3,5,3',5'-tetra-tert-butyl-4,4'-dihydroxydibenzyl ether, octadecyl-4-hydroxy-3,5-dimethylbenzylmercapto-acetate, tridecyl-4-hydroxy-3,5-di-tert-butylbenzylmercaptoacetate, tris(3,5-di-tert-butyl-4-hydroxybenzyl)amine, bis(4-tert-butyl-3-hydroxy-2,6-dimethylbenzyl)-dithioterephthalate, bis(3,5-di-tert-butyl-4-hydroxybenzyl)sulfide, isooctyl-3,5-ditert-butyl-4-hydroxybenzylmercaptoacetate, etc.;
8. Hydroxybenzylated malonates, for example dioctadecyl-2,2-bis(3,5-di-tert-butyl-2-hydroxybenzyl)malonate, di-octadecyl-2-(3-tert-butyl-4-hydroxy-5-methylbenzyl)-malonate, didodecylmercaptoethyl-2,2-bis(3,5-di-tert-butyl-4-hydroxybenzyl)-malonate, bis[4-(1,1,3,3-tetramethylbutyl)phenyl-2,2-bis(3,5-di-tert-butyl-4-hydroxybenzyl)malonate, etc.;
9. Aromatic hydroxybenzyl compounds, for example 1,3,5-tris(3,5-di-tert-butyl-4-hydroxybenzyl)-2,4,6-trimethylbenzene, 1,4-bis(3,5-di-tert-butyl-4-hydroxy-benzyl)-2,3,5,6-tetramethylbenzene, 2,4,6-tris(3,5-di-tert-butyl-4-hydroxybenzyl)-phenol, etc.;
10. Triazine compounds, for example 2,4-bis(octylmercapto)-6-(3,5-di-tert-butyl-4-hydroxy-anilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris-(3,5-di-tert-butyl-4-hydroxyphenoxy)-1,2,3-triazine, 1,3,5-tris(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris-(3,5-di-tert-butyl-4-hydroxyphenylethyl)-1,3,5-triazine, 1,3,5-tris(3,5-di-tert-butyl-4-hyphenylpropionyl)-hexahydro-1,3,5-triazine, 1,3,5-tris(3,5-dicyclohexyl-4-hydroxybenzyl)isocyanurate, etc.;
11. Benzylphosphonates, for example dimethyl-2,5-di-tert-butyl-4-hydroxybenzylphosphonate, diethyl-3,5-di-tert-butyl-4-hydroxybenzylphosphonate, dioctadecyl3,5-di-tert-butyl-4-hydroxybenzylphosphonate, dioctadecyl-5-tert-butyl-4-hydroxy-3-methylbenzylphosphonate, the calcium salt of the monoethyl ester of 3,5-di-tert-butyl-4-hydroxybenzylphosphonic acid, etc.;
12. Acylaminophenols, for example 4-hydroxylauranilide, 4-hydroxystearanilide, octyl N-(3,5-di-tert-butyl-4-hydroxyphenyl)carbamate, etc.;
13. Esters of β-(3,5-di-tert-butyl-4-hydroxyphenyl)propionic acid with mono- or polyhydric alcohols;
14. Esters of β-(5-tert-butyl-4-hydroxy-3-methylphenyl)propionic acid with mono- or polyhydric alcohols;
15. Esters of β-(3,5-dicyclohexyl-4-hydroxyphenyl)propionic acid with mono- or polyhydric alcohols;
16. Esters of 3,5-di-tert-butyl-4-hydroxyphenyl acetic acid with mono- or polyhydric alcohols;
   Suitable mono- or polyhydric alcohols for compounds 13.) to 16.) are methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis-(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2octane].
17. Amides of β-(3,5-di-tert-butyl-4-hydroxyphenyl)propionic acid e.g. N,N'-bis(3,5-ditert-butyl-4-hydroxyphenylpropionyl)hexamethylenediamide, N,N'-bis(3,5-di-tert-butyl-4-hydroxy-phenylpropionyl)trimethylenediamide, N,N'-bis(3,5-di-tert-butyl-4-hydroxyphenylpropionyl)hydrazide, N,N'-bis[2-(3-(3,5-di-tert-butyl-4-hydroxy-phenylpropionyloxy)ethyloxamide (Naugard(R)XL-1, supplied by Uniroyal).
18. Ascorbic Acid (Vitamin C)
19. Aminic antioxidants, for example N,N'-di-isopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylene-diamine, N-(1-methylheptyl)-N'-phenyl-p-phenylenediamine, N-cyclohexyl-N'-phenyl-p-phenylenediamine, 4-(p-toluenesulfamoyl)diphenylamine, N,N'-dimethyl-N,N'-di-sec-butyl-p-phenylenediamine, diphenylamine, N-allyldiphenylamine, 4-isopropoxydiphenyl-amine, N-phenyl-1-naphthylamine, N-(4-tert-octylphenyl)-1-naphthylamine, N-phenyl-2-naphthylamine, octylated diphenylamine, for example p,p'-di-tert-octyldiphenylamine, 4-n-butyl-aminophenol, 4-butyrylaminophenol, 4-nonanoylaminophenol, 4-dodecanoylaminophenol, 4-octadecanoylaminophenol, bis(4-methoxy-phenyl)amine, 2,6-di-tert-butyl-4-dimethylaminomethylphenol, 2,4'-diamino-diphenylmethane, 4,4'-diaminodiphenylmethane, N,N,N',N'-tetramethyl-4,4'-diaminodiphenylmethane, 1,2-bis[(2-methylphenyl)aminoethane, 1,2-bis(phenyl-amino)propane, (o-tolyl)biguanide, bis[4-(1',3'-dimethylbutyl)phenylamine, tert-octylated N-phenyl-1-naphthylamine, a mixture of mono- and dialkylated tert-butyl/tert-octyldiphenylamines, a mixture of mono- and dialkylated nonyldiphenylamines, a mixture of mono- and dialkylated dodecyldiphenylamines, a mixture of mono- and dialkylatedisopropyl/isohexyldiphenylamines, a mixture of mono- and dialkylated tert-butyldiphenylamines, 2,3-dihydro-3,3-dimethyl-4H-1,4-benzothiazine, phenothiazine, a mixture of mono- and dialkylated tert-butyl/tert-octylphenothiazines, a mixture of mono- and dialkylated tert-octyl-phenothiazines, N-allylphenothiazine, N,N,N',N'-tetraphenyl-1,4-diaminobut-2-ene.

Suitable light stabilizers (UV absorbers) and metal deactivators are selected, for example, from groups a) to s):
a) 4,4-diarylbutadienes,
b) cinnamic esters,
c) benzotriazoles,
d) hydroxybenzophenones,
e) diphenylcyanoacrylates,
f) oxamides,
g) 2-phenyl-1,3,5-triazines;
h) antioxidants,
i) nickel compounds,
j) sterically hindered amines,
k) metal deactivators,
l) phosphites and phosphonites,
m) hydroxylamines,
n) nitrones,
o) amine oxides,
p) benzofuranones and indolinones,
q) thiosynergists,
r) peroxide scavengers, and
s) basic costabilizers.

The polymers A), optional antimicrobial compounds B) and optional additives D) may be added to at least one polymer and/or at least one polymerizable compound C) individually or mixed with one another. If desired, the individual components can be mixed with one another before incorporation into the polymer or polymerizable composition for example by dry blending.

The incorporation of the biocides of the invention can be carried out by known methods, such as dry blending in the form of a powder or wet mixing in the form of solutions, dispersions or suspensions for example in an inert solvent, water or oil. The biocides of the invention may be incorporated, for example, before or after molding or also by applying the dissolved or dispersed biocide (or an additive mixture containing the biocide) to the polymer material or the polymerizable composition, with or without subsequent evaporation of the solvent or the suspension/dispersion agent. They may be added directly into the processing apparatus (e.g. extruders, internal mixers, etc.), e.g. as a dry mixture or powder or as solution or dispersion or suspension.

The incorporation can be carried out e.g. in any heatable container equipped with a stirrer, e.g. in a closed apparatus, such as a kneader, mixer or stirred vessel. The incorporation is preferably carried out in an extruder or in a kneader. The processing may take place in an inert atmosphere or in the presence of oxygen.

The addition of biocide (or an additive mixture containing the biocide) to the polymer substrate can be carried out in all customary mixing machines in which the polymer is melted and mixed with the additives. Suitable machines are known to those skilled in the art. They are predominantly mixers, kneaders and extruders.

Processing includes extrusion, co-kneading, pultrusion, compression molding, sheet extrusion, thermoforming, injection molding or rotational molding. The process is preferably carried out in an extruder by introducing the additives during processing.

Particularly preferred processing machines are single-screw extruders, contrarotating and corotating twin-screw extruders, rotomolding devices, planetary-gear extruders, ring extruders or cokneaders. It is also possible to use processing machines provided with at least one gas removal compartment to which a vacuum can be applied.

Suitable extruders and kneaders are described, for example, in Handbuch der Kunststoffextrusion, Vol. 1 Grundlagen, Editors F. Hensen, W. Knappe, H. Potente, 1989, pp. 3-7, ISBN:3-446-14339-4 (Vol. 2 Extrusionsanlagen 1986, ISBN 3-446-14329-7).

The biocide (or an additive mixture containing the biocide) can also be added to the polymer in the form of a masterbatch ("concentrate") which contains the components in a concentration of, for example, about 1 % to about 40% and preferably about 2% to about 20% by weight incorporated in a polymer. The polymer must not necessarily be identical to the polymer where the additives are added finally. In such operations, the polymer can be used in the form of powder, granules, solutions, suspensions or in the form of latices. Incorporation can take place prior to or during the shaping operation, or by applying the dispersed compound to the polymer, with or without subsequent evaporation of the solvent. A further possibility for incorporating the biocide of the invention (or an additive mixture containing the biocide) into polymer substrates is to add them before, during or directly after the polymerization of the corresponding monomers or prior to crosslinking. In this context the additives of the invention can be added as it is or else in encapsulated form (for example in waxes, oils or polymers).

The polymers containing the biocide (or an additive mixture containing the biocide) described herein can be used for the production of moldings, rotomolded articles, injection molded articles, blow molded articles, profiles, films, woven and nonwoven fabrics, and the like.

When the polymer composition or coating composition according to the invention is used in the medical sector, it is for example a catheter, hose, tube, valve, articles for urology, bone cement, fabric, toothbrushes, silicone plastics, films, textiles, diapers and the like.

The coating composition according to the invention usually contains a film forming binder.

The binder can in principle be any binder which is customary in industry, for example those described in Ullmann's Encyclopedia of Industrial Chemistry, 5th Edition, Vol. A18, pp. 368-426, VCH, Weinheim 1991. In general, it is a film forming binder based on a thermoplastic or thermosetting resin, predominantly on a thermosetting resin. Examples thereof are alkyd, acrylic, acrylic alkyd, polyester, phenolic, melamine, epoxy and polyurethane resins and mixtures thereof. The binder can be a cold-curable or hotcurable binder; the addition of a curing catalyst may be advantageous. Suitable catalysts which accelerate curing of the binder are described, for example, in Ullmann's Encyclopedia of Industrial Chemistry, Vol. A18, p. 469, VCH Verlagsgesellschaft, Weinheim 1991.

The coating compositions according to the invention are for example employed as a top coat for plastics or metal or as a wood coating.

Examples of coatings compositions containing specific binders are:
1. paints based on cold- or hot-crosslinkable alkyd, acrylate, polyester, epoxy or melamine resins or mixtures of such resins, if desired with addition of a curing catalyst;
2. two-component polyurethane paints based on hydroxyl-containing acrylate, polyester or polyether resins and aliphatic or aromatic isocyanates, isocyanurates or polyisocyanates;
3. one-component polyurethane paints based on blocked isocyanates, isocyanurates or polyisocyanates which are deblocked during baking, if desired with addition of a melamine resin;
4. one-component polyurethane paints based on a trisalkoxycarbonyltriazine crosslinker and a hydroxyl group containing resin such as acrylate, polyester or polyether resins;
5. one-component polyurethane paints based on aliphatic or aromatic urethaneacrylates or polyurethaneacrylates having free amino groups within the urethane structure and melamine resins or polyether resins, if necessary with curing catalyst;
6. two-component paints based on (poly)ketimines and aliphatic or aromatic isocyanates, isocyanurates or polyisocyanates;
7. two-component paints based on (poly)ketimines and an unsaturated acrylate resin or a polyacetoacetate resin or a methacrylamidoglycolate methyl ester;
8. two-component paints based on carboxyl- or amino-containing polyacrylates and polyepoxides;
9. two-component paints based on acrylate resins containing anhydride groups and on a polyhydroxy or polyamino component;
10. two-component paints based on acrylate-containing anhydrides and polyepoxides;
11. two-component paints based on (poly)oxazolines and acrylate resins containing anhydride groups, or unsaturated acrylate resins, or aliphatic or aromatic isocyanates, isocyanurates or polyisocyanates;
12. two-component paints based on unsaturated polyacrylates and polymalonates;
13. thermoplastic polyacrylate paints based on thermoplastic acrylate resins or externally crosslinking acrylate resins in combination with etherified melamine resins;
14. paint systems based on siloxane-modified or fluorine-modified acrylate resins.

The coating compositions may also comprise further components, examples being solvents, pigments, dyes, plasticizers, stabilizers, thixotropic agents, drying catalysts and/or levelling agents. Examples of possible components are those described in Ullmann's Encyclopedia of Industrial Chemistry, 5th Edition, Vol. A18, pp. 429-471, VCH, Weinheim 1991.

Possible drying catalysts or curing catalysts are, for example, organometallic compounds, amines, amino-containing resins and/or phosphines. Examples of organometallic compounds are metal carboxylates, especially those of the metals Pb, Mn, Co, Zn, Zr or Cu, or metal chelates, especially those of the metals Al, Ti or Zr, or organometallic compounds, such as organotin compounds, for example.

Examples of metal carboxylates are the stearates of Pb, Mn or Zn, the octoates of Co, Zn or Cu, the naphthenates of Mn and Co or the corresponding linoleates, resinates or tallates.

Examples of metal chelates are the aluminium, titanium or zirconium chelates of acetylacetone, ethyl acetylacetate, salicylaldehyde, salicylaldoxime, o-hydroxyacetophenone or ethyl trifluoroacetylacetate, and the alkoxides of these metals.

Examples of organotin compounds are dibutyltin oxide, dibutyltin dilaurate or dibutyltin dioctoate.

Examples of amines are, in particular, tertiary amines, for example tributylamine, triethanolamine, N-methyldiethanolamine, N-dimethylethanolamine, N-ethylmorpholine, N-methylmorpholine or diazabicyclooctane (triethylenediamine) and salts thereof. Further examples are quaternary ammonium salts, for example trimethylbenzyl-ammonium chloride.

Amino-containing resins are simultaneously binder and curing catalyst. Examples thereof are amino-containing acrylate copolymers.

The curing catalyst used can also be a phosphine, for example triphenylphosphine.

The coating compositions can also be radiation-curable coating compositions. In this case, the binder essentially comprises monomeric or oligomeric compounds containing ethylenically unsaturated bonds, which after application are cured by actinic radiation, i.e. converted into a crosslinked, high molecular weight form. Where the system is UV-curing, it generally contains a photoinitiator as well. Corresponding systems are described in the above mentioned publication Ullmann's Encyclopedia of Industrial Chemistry, 5th Edition, Vol. A18, pages 451-453.

The coating compositions according to the invention can be applied to any desired substrates, for example to metal, wood, plastic, ceramic materials or plastic wood composites.

The coating compositions according to the invention are also suitable for protecting a wood surface. In this case, the coating compositions can be applied in form of a varnish, paint, etc. or by impregnation. A further aspect of the invention is a method for providing antimicrobial activity to a wood surface which method comprises applying a present coatings composition, especially a varnish, paint, stain or impregnation on wood. The coating composition may be applied by impregnation or as base coat (primer) or top coat.

If the coating composition is employed for protecting a wood surface, preferably a solvent is used, selected e.g. from the group consisting of aliphatic hydrocarbons, cycloaliphatic hydrocarbons, aromatic hydrocarbons, alcohols, ethers, esters, ketones, glycols, glycol ethers, glycol esters, polyglycols or mixtures thereof. Preferably, in this case the binder is selected from the group consisting of alkyd resins, modified alkyd resins, autocrosslinking or non-autocrosslinking acrylic resins, polyester resins, drying oils, phenolic resins, nitrocellulose or mixtures thereof.

Other additives like fungicides or insecticides are possible. Suitable components are known to the skilled artisan.

Any coating composition suitable for coating wood may be used as a top coat. It will normally contain a binder, dissolved or dispersed in an organic solvent or in water or a mixture of water and solvent. The binder may typically be a surface coating resin which dries in the air or hardens at room temperature. Exemplary of such binders are nitrocellulose, polyvinyl acetate, polyvinyl chloride, unsaturated polyester resins, polyacrylates, polyurethanes, epoxy resins, phenolic resins, and especially alkyd resins. The binder may also be a mixture of different surface coating resins. Provided the binders are curable binders, they are normally used together with a hardener and/or accelerator.

The top coat may also be a radiation-curable, solvent-free formulation of photopolymerizable compounds. Illustrative examples are mixtures of acrylates or methacrylates, unsaturated polyester/styrene mixtures or mixtures of other ethylenically unsaturated monomers or oligomers.

The top coat may contain a soluble dye and/or a pigment and/or a filler. The pigment may be an organic, inorganic or metallic pigment. The pigments may be opaque or transparent, such as for example transparent iron oxides. The filler may be typically kaolin, calcium carbonate or aluminium silicate. Preferably, the top coat is a clear varnish, i.e. it contains no undissolved components.

The present invention is particularly useful for the following applications: in home applications, such as furniture, wood floors, chipboards or timber work; outdoor applications, such as fences, construction parts, wooden fronts, window frames and the like.

The present coatings compositions may be applied to the substrates by the customary methods, for example by brushing, spraying, pouring, dipping or electrophoresis; see also Ullmann's Encyclopedia of Industrial Chemistry, 5th Edition, Vol. A18, pp. 491-500.

Depending on the binder system, the coatings may be cured at room temperature or by heating. The coatings may for example be cured at 50 to 150°C, and, e.g. in the case of powder coatings or coil coatings, even at higher temperatures.

The coating compositions can comprise an organic solvent or solvent mixture in which the binder is soluble. The coating compositions can otherwise be an aqueous solution or dispersion. The vehicle can also be a mixture of organic solvent and water. The coating composition may be a high-solids paint or can be solvent-free (e.g. a powder coating material). Powder coatings are, for example, those described in Ullmann's Encyclopedia of Industrial Chemistry, 5th Ed., A18, pages 438-444. The powder coating material may also have the form of a powder-slurry (dispersion of the powder preferably in water).

The pigments can be inorganic, organic or metallic pigments. The present coatings compositions may contain no pigments and may be used as a clearcoat.

The invention is illustrated in detail with reference to the following non-restrictive examples.

### EXAMPLES

6-Deoxychlorocellulose was prepared according to example 1 of US 2011/0175023 A1. Afterwards the chlorinated polysaccharide is reacted with ethanolamine to replace the chlorine atoms by -NH-CH₂-CH₂-OH groups.

6-Deoxy-(2-hydroxyethylamino)cellulose (DP 30 to 53, 45 g, 0.24 mol) and KOH (0.5 g, 0.01 mol) are placed in a 2000 mL round bottom flask and dissolved in 1000 mL DMSO. Glycidylmethacrylate (17.3 g, 0.12 mol) is added and the resulting mixture is heated to 80°C and stirred for 40 h. After cooling to ambient temperature, a mixture of methanol (500 mL) and acetone (1500 mL) is added, the resulting precipitate is filtered off, washed twice with methanol (100 mL) and dried at 70°C in vacuo over night. The yield of the resulting product is about 80%. The methacrylate content varies between 2 and 10% (on a molecular basis in relation to glucose units).

## Claims

1. A method for producing an ethylenically unsaturated polysaccharide which comprises
a) providing a chlorinated polysaccharide, wherein at least a part or all of the hydroxyl groups have been replaced by chlorine atoms,
b) reacting the chlorinated polysaccharide with at least one compound of the formula (I)
HX-A-OH (I)
wherein
X is O or NR^{a}, where R^{a} is hydrogen, alkyl, cycloalkyl or aryl,
A is an unsubstituted or substituted C₁-C₂₀-alkylene which may be interrupted by one or more nonadjacent groups which are selected from -O- and -S-,
to replace at least a part or all of the chlorine atoms by -X-A-OH groups,
c) reacting the reaction product of step b) with at least one compound of the formula (II) 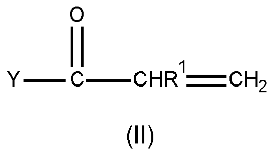 wherein
R¹ is hydrogen or C₁-C₄-alkyl, and
Y is a group cable of reacting with active hydrogen atoms of the -X-A-OH groups.

2. The method according to claim 1, wherein in step c) the reaction product of step b) is reacted with at least one compound of the formula (II.1) 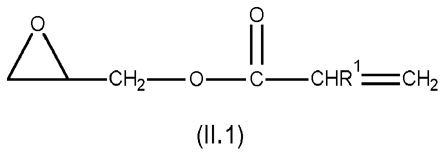 wherein
R¹ is hydrogen or C₁-C₄-alkyl.

3. The method according to claim 2, where in step c) at least a part or all of the -X-A-OH groups are replaced by groups of the formula (II.1a) 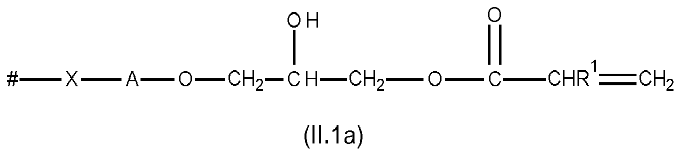 wherein
X is O or NR^{a}, where R^{a} is hydrogen, alkyl, cycloalkyl or aryl,
A is an unsubstituted or substituted C₁-C₂₀-alkylene which may be interrupted by one or more nonadjacent groups which are selected from -O- and -S-,
R¹ is hydrogen or C₁-C₄-alkyl, and
# represents the bonding site to a carbon atom of the polysaccharide,
with the proviso that if X is NH, at least a part or all of the -X-A-OH groups can also be replaced by groups of the formula (II.1b) 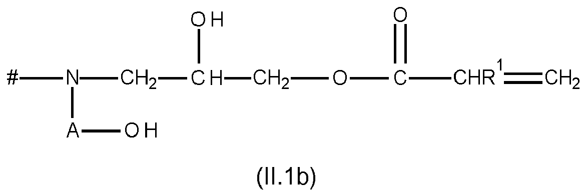 wherein X, A, R¹ and # have the afore-mentioned meaning.

4. The method according to any of the preceding claims, wherein providing the chlorinated polysaccharide in step a) comprises
a1) dissolving a polysaccharide in a solvent system which comprises at least one ionic liquid, and
a2) reacting the polysaccharide with a chlorinating agent.

5. The method according to claim 4, wherein the polysaccharide employed in step a1) comprises -CH₂OH groups.

6. The method according to claim 4 or 5, wherein the polysaccharide is selected from cellulose, hemicellulose or chemically modified cellulose.

7. The process according to any of claims 4 to 6, wherein the chlorinating agent employed in step a2) is thionyl chloride.

8. The process according to any of the preceding claims, wherein the chlorinated polysaccharide has a degree of substitution (DS) of at least 0.5, in particular of at least 1.

9. The process according to any of the preceding claims, wherein the chlorinated polysaccharide has a degree of polymerization (DP) of 10 to 100, preferably 20 to 60, in particular 30 to 50.

10. The process according to any of the preceding claims, wherein in step a) a chlorinated cellulose is provided, wherein 60 to 100%, preferably 80 to 100%, in particular 90 to 99.9% of the hydroxyl groups in the 6-position have been replaced by chlorine atoms.

11. The process according to any of the preceding claims, wherein in step a) a chlorinated cellulose is provided, wherein 0 to 20%, more preferably 0.1 to 10% of the hydroxyl groups directly bound to the ring carbon atoms have been replaced by chlorine atoms.

12. The process according to any of the preceding claims, wherein the compound of the formula (I) is selected from 1,2-ethandiol or 2-aminoethanol.

13. The process according to any of the preceding claims, wherein in step b) the compound of the formula (I) is used in an at least 3-fold molar excess, preferably in an at least 6-fold molar excess, more preferably in an at least 10-fold molar excess over the chlorinated polysaccharide.

14. The process according to any of claims 1 to 13, wherein the reaction in step b) is performed in the essential absence of an extraneous solvent.

15. The process according to any of claims 1 to 13, wherein the reaction in step b) is performed in the presence of a solvent, preferably in the presence of a solvent selected from polar solvents, in particular in the presence of a solvent selected from alcohols, ketones, ethers, esters, acetonitrile, ethylencarbonate, formamide, dimethylformamide, dimethylacetamide, dimethylsulfoxid and mixtures thereof.

16. The process according to any of the preceding claims, wherein the reaction in step b) is performed in the presence of a base.

17. The process according to claim 16, where in step b) the chlorinated polysaccharide is reacted with a compound of the formula (I) wherein X is a group NR^{a} and an excess of the compound of the formula (I) acts as the base.

18. The process according to claim 16 or 17, wherein the base is employed in at least stoichiometric amount with regard to the molar amount of the chlorine groups of the chlorinated polysaccharide.

19. The process according to any of the preceding claims, wherein the reaction product obtained in step b) is essentially free of chlorine atoms.

20. The process according to any of the preceding claims, wherein the compound of the formula (II) is selected from glycidylacrylate and glycidylmethacrylate.

21. The process according to any of the preceding claims, where in step c) the compound of the formula (II) is used in an amount of from 1 to 100 mol%, more preferably in an amount of from 5 to 50 mol%, in particular in an amount of from 10 to 20 mol%, based on the molar amount of the repeat units of the polysaccharide reaction product of step b) employed in step c).

22. An ethylenically unsaturated polysaccharide, obtainable by the process according to any of the claims 1 to 21.

23. An ethylenically unsaturated polysaccharide comprising at least one group of the formula (II.a) 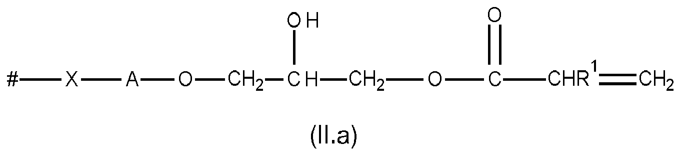 and/or comprising at least one group of the formula (II.b) 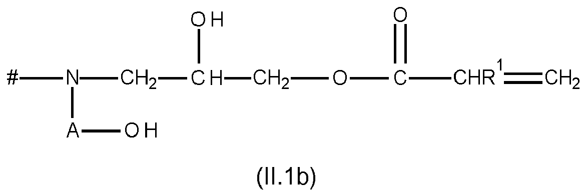 wherein
X is O or NR^{a}, where R^{a} is hydrogen, alkyl, cycloalkyl or aryl,
A is unsubstituted or substituted C₁-C₂₀-alkylene which may be interrupted by one or more nonadjacent groups which are selected from -O- and -S-, and
# represents the bonding site to a carbon atom of the polysaccharide.

24. The ethylenically unsaturated polysaccharide according to claim 23, comprising additionally at least one group of the formula #-X-A-OH, wherein
X is O or NR^{a}, where R^{a} is hydrogen, alkyl, cycloalkyl or aryl,
A is unsubstituted or substituted C₁-C₂₀-alkylene which may be interrupted by one or more nonadjacent groups which are selected from -O- and -S-, and
# represents the bonding site to a carbon atom of the polysaccharide.

25. The ethylenically unsaturated polysaccharide according to any of claims 22 to 24, having a degree of polymerization (DP) of 10 to 100, preferably 20 to 60, in particular 30 to 50.

26. The ethylenically unsaturated polysaccharide according to any of claims 22 to 25, having a DS of groups derived from the compound of the formula (II) of from 0.01 to 1, more preferably 0.01 to 0.2, most preferably 0.02 to 0.1.

27. The ethylenically unsaturated polysaccharide according to any of claims 22 to 26, having a DS of groups of the formula #-X-A-OH of from 0 to 0.99.

28. The ethylenically unsaturated polysaccharide according to any of claims 22 to 27, being essentially free of chlorine atoms.

29. A polymer P) comprising polymerized units of
α) at least one ethylenically unsaturated polysaccharide according to any of claims 22 to 28 or obtainable by the process according to any of the claims 1 to 21,
β) optionally at least one ethylenically unsaturated monomer different from component α).

30. The polymer P) according to claim 29, where the weight fraction of the at least one ethylenically unsaturated polysaccharide A) is 0.05 to 100% by weight, preferably 0.1 to 50% by weight, more preferably 0.5 to 20% by weight, based on the total weight of components α) and β).

31. The polymer P) according to claim 29 or 30, where the ethylenically unsaturated monomer β) is selected from
a) esters of α,β-ethylenically unsaturated monocarboxylic and dicarboxylic acids with C₁-C₂₀ alkanols,
b) compounds with a free-radically polymerizable, α,β-ethylenically unsaturated double bond and at least one cationogenic and/or cationic group per molecule,
c) compounds with a free-radically polymerizable, α,β-ethylenically unsaturated double bond and at least one anionogenic and/or anionic group per molecule,
d) esters of vinyl alcohol and allyl alcohol with C₁-C₃₀ monocarboxylic acids,
e) amide group containing monomers,
f) esters of α,β-ethylenically unsaturated monocarboxylic and dicarboxylic acids with C₂-C₃₀ alkanediols, amides of α,β-ethylenically unsaturated monocarboxylic and dicarboxylic acids with C₂-C₃₀ amino alcohols which contain a primary or secondary amino group,
g) phosphorus monomers,
h) vinyl ethers, polyether (meth)acrylates,
i) vinylaromatics,
k) ethylenically unsaturated nitriles,
l) vinyl halides, vinylidene halides,
m) C₂-C₈ monoolefins, nonaromatic hydrocarbons having at least two conjugated double bonds,
n) monomers containing urea groups,
o) monomers having crosslinking groups,
and mixtures thereof.

32. A personal care composition comprising
A) at least one polymer P) comprising polymerized units of
α) at least one ethylenically unsaturated polysaccharide according to any of claims 22 to 28 or obtainable by the process according to any of the claims 1 to 21,
β) optionally at least one ethylenically unsaturated monomer different from component α),
B) at least one cosmetically acceptable or pharmaceutically acceptable carrier.

33. A pharmaceutical composition, comprising
A) at least one polymer P) comprising polymerized units of
α) at least one ethylenically unsaturated polysaccharide according to any of claims 22 to 28 or obtainable by the process according to any of the claims 1 to 21,
β) optionally at least one ethylenically unsaturated monomer different from component α),
B) optionally at least one pharmaceutically acceptable active ingredient, and
C) at least one pharmaceutically acceptable excipient.

34. A microbiocidal composition, comprising
A) at least one polymer P) comprising polymerized units of
α) at least one ethylenically unsaturated polysaccharide according to any of claims 22 to 28 or obtainable by the process according to any of the claims 1 to 21,
β) optionally at least one ethylenically unsaturated monomer different from component α),
B) optionally at least one further microbiocidal compound different from the compounds of component (A),
C) optionally at least one polymer and/or at least one polymerizable compound, and
D) optionally at least one additive.

35. The use of a polymer P) as defined in any one of claims 29 to 31 in
- a personal care composition, or
- a composition used for industrial or institutional or hospital disinfection, or
- a material protection composition, or
- a pharmaceutical composition, or
- a microbiocidal polymer, or
- a microbiocidal coating composition.

36. The use of a polymer P) as defined in any one of claims 29 to 31 as auxiliary in pharmacy, preferably as or in (a) coating(s) for solid drug forms, as surface-active compound, as or in (an) adhesive(s) and as or in (a) coating(s) for the textile, paper, printing and leather industry.
